# EUROPÄISCHE PATENTSCHRIFT

(11) **EP 3 394 573 B1**
(45) Veröffentlichungstag und Bekanntmachung des Hinweises auf die Patenterteilung: **16.03.2022**
(21) Anmeldenummer: 16797541.6
(22) Anmeldetag: 16.11.2016
(51) Int. Cl.: G01F 1/32, G01L 9/00

(54) **WANDLERVORRICHTUNG SOWIE MITTELS EINER SOLCHEN WANDLERVORRICHTUNG GEBILDETES MESSSYSTEM**
TRANSDUCER DEVICE AND MEASURING SYSTEM PRODUCED WITH SUCH A TRANSDUCER DEVICE
DISPOSITIF TRANSDUCTEUR ET SYSTÈME DE MESURE FORMÉ AU MOYEN D'UN TEL DISPOSITIF TRANSDUCTEUR

(30) Priorität: 22.12.2015 DE 102015122553
(43) Veröffentlichungstag der Anmeldung: 31.10.2018
(60) Teilanmeldung: 22150346.9
(73) Patentinhaber: Endress+Hauser Flowtec AG, 4153 Reinach (CH)
(72) Erfinder: HÖCKER, Rainer, 79761 Waldshut (DE)
(74) Vertreter: Andres, Angelika Maria
(86) Internationale Anmeldenummer: PCT/EP2016/077809
(87) Internationale Veröffentlichungsnummer: WO 2017/108278

(56) Entgegenhaltungen:
- WO-A2-2005/046426
- DE-A1- 19 856 951
- DE-A1-102013 010 015
- US-A- 4 361 050
- US-A1- 2011 247 430
- US-A1- 2015 268 082

## Beschreibung

Die Erfindung betrifft eine Wandlervorrichtung, insb. zum Erfassen von Druckschwankungen in einer in einem strömenden Fluid ausgebildeten Kármánscher Wirbelstrasse, bzw. ein mittels einer solchen Wandlervorrichtung gebildetes Meßsystem.

In der Prozeßmeß- und Automatisierungstechnik werden für die Messung von physikalischen Meßgrößen fluider Meßstoffe, wie z.B. eines Drucks und/oder einer Strömungsgeschwindigkeit eines in einer Rohrleitung strömenden fluiden Meßstoffs, oftmals dem Konvertieren der zu erfassenden Meßgröße in ein elektronisch auswertbares Meßsignal dienliche Wandlervorrichtungen mit einem Verformungskörper und einem daran angebrachten bzw. darauf plazierten Sensorelement verwendet, wobei der Verformungskörper dafür eingerichtet ist, in Abhängigkeit einer darauf einwirkenden mechanischen Kraft und/oder in Abhängigkeit einer Temperaturänderung zumindest teilweise, gleichwohl reversibel verformt zu werden, derart, daß auch das Sensorelement eine zumindest eine elektrische Größe des Sensorelements, beispielsweise nämliche einen ohmschen Widerstand, eine Kapazität oder eine Induktivität bzw. eine Impedanz, beeinflussende Gestaltänderung erfährt, und wobei der Verformungskörper dafür eingerichtet ist, auf einer dem Sensorelement abgewandten Seite vom jeweiligen Meßstoff kontaktiert zu werden, derart, daß die Gestaltänderung der Oberfläche des Sensorelements zumindest anteilig durch eine vom fluiden Meßstoff auf den Verformungskörper übertragene Kraft und/oder durch eine zwischen Verformungskörper bzw. Sensorelement und Meßstoff etablierte Temperaturdifferenz bewirkt ist. Zusätzlich kann der Verformungskörper auch noch aktiv bzw. aktorisch zu mechanischen Schwingungen um eine statische Ruhelage angeregt werden, beispielsweise nämlich zu von einer Dichte bzw. Viskosität des jeweiligen Meßstoffs abhängigen Resonanzschwingungen. Als Beispiele für solche - in der industriellen Meß- und Automatisierungstechnik seit langem etablierte - Wandlervorrichtungen bzw. damit gebildete Meßsysteme sind u.a. anderem dem Messen einer Volumendurchflußrate bzw. einer Strömungsgeschwindigkeit dienliche Wirbel-Durchfluß-Meßgeräte, dem Messen einer Massendurchflußrate bzw. einer Dichte dienliche vibronische Massendurchfluß- und/oder Dichte-Meßgeräte, aber auch dem Messen eines Druckes und/oder einer Temperatur dienliche Druck- bzw. Temperatur-Meßgeräte oder auch sonarbasierte, insb. vom Meßstoff induzierten Schall auswertende und/oder dem Analysieren von mehrphasigen Meßstoffen (Dispersionen) dienliche, Durchfluß-Überwachungssysteme zu nennen, wie sie u.a. auch aus der US-A 2005/0044966, der US- 2005/0125170, der US-A 2005/0155437, der US-A 2006/0081069, der US-A 2006/0169058, der US-A 2006/0230841, der US-A 2006/0254363, der US-A 2006/0266127, der US-A 2007/0000334, der US-A 2008/0072686, der US-A 2009/030121, der US-A 2011/0154913, der US-A 2011/0247430, der US-A 2012/0073384, der US-A 2014/0060154, der US-A 2015/0268082, der US-A 57 05 754, der US-A 60 03 384, der US-A 61 01 885, der US-B 62 23 605, der US-B 63 52 000, der US-B 69 10 387, der US-B 69 38 496, der WO-A 2014/102036, der WO-A 2014/102037, der WO-A 2014/198494, der WO-A 2014/198495 oder der WO-A 2015/135738 bekannt sind bzw. wie sie u.a. auch von der Anmelderin selbst unter der Warenbezeichnung "Prowirl D 200", "Prowirl F 200", "Prowirl O 200", "Prowirl R 200", "Promass 84F", "Promass 80S","Promass 83X", "Cerabar PMC71", oder "Cerabar PMP51" angeboten werden.

DE102013010015-A1 offenbart einen Drucksensor für ein fluides Medium mit einem abfragbaren Oberflächen-Wellen-Sensorelement. In einem Innenraum ist eine Membran angeordnet, die auf einer Seite von dem fluiden Medium beaufschlagbar ist, wobei das OFW-Sensorelement zum Detektieren einer Formänderung der Membran in Abhängigkeit von einer Druckdifferenz ausgebildet ist. Eine Auswerteelektronik ist eingerichtet um Signale des Drucksensors zu senden und zu empfangen.

DE19856951-A1 offenbart eine Sensoranordnung zur Auswertung eines einwirkenden Drucks mit einem piezoelektrischen Kristall als Meßelement auf einer Membran. Das Meßelement ist mit Interdigitalwandlern versehen, zur Erzeugung und zum Empfang der Oberflächenwellen, wobei zwischen den Interdigitalwandlern eine Meßstrecke oder eine Oszillatorschaltung gebildet ist. Die reflektierten Signale werden im Interdigitalwandler rückgewandelt und als Pulsfolge an die Sende- und Empfangseinheit abgestrahlt. Die Laufzeitänderung der Oberflächenwelle in Abhängigkeit der Ausbreitungsbedingungen wie z.B. mechanischen Spannungen wird als Messgrösse genutzt.

Der Verformungskörper kann demnach beispielsweise scheibenförmig oder auch röhrenförmig ausgebildet sein, mithin mittels einer kreisscheibenförmigen Membran und/oder mittels eines Rohres gebildet sowie zudem dafür eingerichtet sein, aus einer statischen Ruhelage ausgebogen und/oder gedehnt zu werden, beispielsweise aufgrund einer veränderlichen Krafteinwirkung und/oder aufgrund von aktiv angeregten bzw. erzwungenen mechanischen Schwingungen. Als Material für den Verformungskörper kommen regelmäßig Keramik oder Metall, beispielsweise nämlich Edelstahl, Titan, Tantal oder Nickelbasislegierungen, zum Einsatz. Das vorbezeichnete Sensorelement wiederum kann beispielsweise mittels eines Dehnungsmeßstreifens, einer Relativbewegungen erfassenden Induktionsspule bzw. eines Relativbewegungen erfassenden Kondensators gebildet bzw. Bestandteil einer Meßbrückenschaltung sein.

Nicht zuletzt aufgrund der großen Nähe des Sensorelements zum Meßstoff bzw. der zumeist hohen thermischen Leitfähigkeit des Verformungskörpers einerseits sowie der limitierten Temperaturfestigkeit bzw. -stabilität der für das Sensorelement bzw. dessen Verbindung mit dem Verformungskörper regelmäßig verwendeten Materialien anderseits ist der Einsatz von Wandlervorrichtungen der in Rede stehenden Art zumeist für solche Meßstellen vorbehalten, bei denen eine maximale Meßstoff-Temperatur bei höchsten 400°C spezifiziert ist. Gleichwohl besteht fortwährend auch ein Bedarf, solche - nicht zuletzt auch hinsichtlich des damit verwirklichten, zumal vielseitig einsetzbaren Wandler- bzw. Meßprinzips wie auch wegen der damit regelmäßig erzielbaren hohen Meßgenauigkeiten - bewährten Wandlervorrichtungen auch in solchen Meßstellen einzusetzen, bei denen Meßstoff-Temperaturen von mehr als 400°C spezifiziert sind, beispielsweise zum Messen von Meßgrößen eines einer Konversion ("Cracken") unterzogenen, mithin eine Temperatur von über 450°C aufweisenden Erdöls, und/oder zum Messen von Meßgrößen eines hocherhitzten, beispielweise nämlich bei vorbezeichneter Konversion verwendeten flüssigen Wärmeträgers, wie z.B. einem Thermalöl oder einer Salzschmelze. Ausgehend vom vorbezeichneten Stand der Technik besteht eine Aufgabe der Erfindung darin, den Aufbau von einen dem Wandeln von Kräften und/oder Temperaturen dienlichen Verformungskörper aufweisenden Wandlervorrichtungen dahingehend zu verbessern, daß diese auch Meßstoff-Temperaturen von mehr als 400°C ausgesetzt werden können bzw. daß damit auch Meßgrößen von mehr als 400°C aufweisenden Meßstoffen erfaßbar sind.

Zur Lösung der Aufgabe besteht die Erfindung in einer Wandlervorrichtung nach Anspruch 1.

Darüberhinaus besteht die Erfindung auch in einem Meßsystem, umfassend: eine solche Wandlervorrichtung sowie eine mit nämlicher Wandlervorrichtung, insb. mit dem Wellenleiter der Wandlervorrichtung, elektrisch gekoppelte Meßelektronik, wobei die Meßelektronik dafür eingerichtet ist, wenigstens ein die Wandlervorrichtung speisendes und/oder ansteuerndes elektrisches Treibersignal zu generieren und in die Wandlervorrichtung, insb. nämlich in eine Antenne der Wandlervorrichtung bzw. einen Wellenleiter der Wandlervorrichtung, einzukoppeln, und wobei die Meßelektronik dafür eingerichtet ist, ein von der Wandlervorrichtung, insb. nämlich von einer Antenne der Wandlervorrichtung bzw. einem Wellenleiter der Wandlervorrichtung, geliefertes Meßsignal zu empfangen und auszuwerten, insb. nämlich mittels des Meßsignals einen ein Ausmaß einer momentanen Gestaltänderung des Funksensors quantifizierenden Meßwert und/oder einen eine Frequenz einer periodischen Gestaltänderung des Funksensors quantifizierenden Meßwert zu ermitteln.

Desweiteren besteht die Erfindung auch darin eine solche Wandlervorrichtung bzw. ein solches Meßsystems zum Erfassen wenigstens einer physikalischen Meßgröße eines, beispielsweise zumindest zeitweise strömenden und/oder zumindest zeitweise eine Meßstoff-Tempratur von mehr als 400°C aufweisenden, fluiden Meßstoffs zu verwenden, beispielsweise nämlich zum Erfassen einer Temperatur eines fluiden Meßstoffs und/oder zum Erfassen einer Dichte eines fluiden Meßstoff und/oder zum Erfassen eines Drucks in einem fluiden Meßstoff und/oder zum Erfassen einer Strömungsgeschwindigkeit eines in einer Rohrleitung geführten fluiden Meßstoffs und/oder zum Erfassen von Druckschwankungen in einer in einem strömenden fluiden Meßstoff ausgebildeten Kärmänscher Wirbelstrasse, und zum Erzeugen von nämliche Meßgröße repräsentierenden, insb. digitalen, Meßwerten zu verwenden.

Nach einer ersten Ausgestaltung der Wandlervorrichtung der Erfindung ist ferner vorgesehen, daß der Funksensor dafür eingerichtet ist, empfangene elektromagnetische Freiraumwellen in dazu, insb. um wenigstens 1 µs (Mikrosekunde), zeitverzögert abgehende elektromagnetische Freiraumwellen zu konvertieren.

Nach einer zweiten Ausgestaltung der Wandlervorrichtung der Erfindung ist ferner vorgesehen, daß der Funksensor dafür eingerichtet ist, entlang der Oberfläche propagierende akustische Oberflächenwellen zu reflektieren, insb. derart, daß von einer Sende- und Empfangszone abgehende akustische Oberflächenwellen in dazu, insb. um wenigstens 1 µs (Mikrosekunde), zeitverzögert auf nämliche Sende- und Empfangszone auftreffende akustische Oberflächenwellen zu konvertieren.

Nach einer dritten Ausgestaltung der Wandlervorrichtung der Erfindung ist ferner vorgesehen, daß der Verformungskörper dafür eingerichtet ist, auf eine darauf - insb. zumindest zeitweise mit einem periodisch ändernden Betrag und/oder zumindest zeitweise mit einer periodisch ändernden Wirkrichtung - einwirkende zeitlich veränderliche mechanische Kraft mit zeitlich ändernden elastischen Verformungen zu reagieren, insb. nämlich mit zeitlich ändernden elastischen Verformungen, die zeitlich ändernde Gestaltänderungen der Oberfläche des Funksensors bewirken.

Nach einer vierten Ausgestaltung der Wandlervorrichtung der Erfindung ist ferner vorgesehen, daß der Verformungskörper dafür eingerichtet ist, auf eine darauf - insb. zumindest zeitweise mit einem periodisch ändernden Betrag und/oder zumindest zeitweise mit einer periodisch ändernden Wirkrichtung - einwirkende zeitlich veränderliche mechanische Kraft, insb. eine durch einen den Verformungskörper kontaktierenden fluiden Meßstoff bewirkte mechanische Kraft, mit mechanischen Schwingungen um eine statische Ruhelage zu reagieren, insb. nämlich mit mechanischen Schwingungen um eine statische Ruhelage, die zeitlich ändernde Gestaltänderungen der Oberfläche des Funksensors bewirken.

Nach einer fünften Ausgestaltung der Wandlervorrichtung der Erfindung ist ferner vorgesehen, daß der Verformungskörper dafür eingerichtet ist, zum Bewirken der zeitlich ändernden Gestaltänderungen der Oberfläche des Funksensors vibrieren gelassen zu werden.

Nach einer sechsten Ausgestaltung der Wandlervorrichtung der Erfindung ist ferner vorgesehen, daß der Verformungskörper in einer statischen Ruhelage mechanisch vorgespannt, insb. nämlich elastisch gedehnt, ist.

Nach einer siebenten Ausgestaltung der Wandlervorrichtung der Erfindung ist ferner vorgesehen, daß der Verformungskörper dafür eingerichtet ist, auf einer dem Funksensor abgewandten Seite von einem, insb. zumindest zeitweise strömenden, fluiden Meßstoff kontaktiert zu werden, insb. derart, daß die Gestaltänderung der Oberfläche des Funksensors zumindest anteilig durch eine vom fluiden Meßstoff auf den Verformungskörper übertragene Kraft und/oder durch eine zwischen Meßstoff und Verformungskörper etablierte Wärmeübertragung bewirkt ist.

Nach einer achten Ausgestaltung der Wandlervorrichtung der Erfindung ist ferner vorgesehen, daß der Verformungskörper zumindest anteilig aus einem Metall, beispielsweise nämlich einem Edelstahl, Titan, Tantal oder einer Nickelbasislegierung, besteht.

Nach einer neunten Ausgestaltung der Wandlervorrichtung der Erfindung ist ferner vorgesehen, daß der Verformungskörper zumindest anteilig aus einer Keramik besteht.

Nach einer zehnten Ausgestaltung der Wandlervorrichtung der Erfindung ist ferner vorgesehen, daß der Verformungskörper scheibenförmig ausgebildet ist.

Nach einer elften Ausgestaltung der Wandlervorrichtung der Erfindung ist ferner vorgesehen, daß der Verformungskörper eine, beispielsweise kreisscheibenförmige, Membran aufweist bzw. mittels einer, beispielsweise kreisscheibenförmige, Membran gebildet ist. Diese Ausgestaltung der Erfindung weiterbildend ist ferner vorgesehen, daß der Funksensor auf einer Seite der Membran positioniert und mit dieser, beispielsweise durch Kleben, stoffschlüssig verbunden ist.

Nach einer zwölften Ausgestaltung der Wandlervorrichtung der Erfindung ist ferner vorgesehen, daß der Verformungskörper eine, beispielsweise kreisscheibenförmige, Membran aufweist bzw. mittels einer, beispielsweise kreisscheibenförmige, Membran gebildet ist, und daß der Verformungskörper eine, beispielsweise paddelförmige und/oder zumindest abschnittsweise keilförmige und/oder zumindest abschnittsweise stabförmige, Sensorfahne aufweist bzw. mittels einer, beispielsweise paddelförmigen und/oder zumindest abschnittsweise keilförmigen und/oder zumindest abschnittsweise stabförmigen, Sensorfahne gebildet ist. Der Funksensor auf einer Seite der Membran positioniert und mit dieser, beispielsweise durch Kleben, stoffschlüssig verbunden sein, während die Sensorfahne auf einer dem Funksensor abgewandten Seite der Membran positioniert sein kann. Diese Ausgestaltung der Erfindung weiterbildend ist ferner vorgesehen, daß die Sensorfahne dafür eingerichtet ist, eine darauf einwirkende Kraft in eine die Gestaltänderung der Oberfläche des Funksensors bewirkende Verformung der Membran zu wandeln und/oder in ein Lumen eines Rohr eingesetzt bzw. von einem in einem Lumen eines Rohr strömenden fluiden Meßstoff umströmt zu werden. Insbesondere kann die die Sensorfahne dafür eingerichtet sein, eine darauf einwirkende, von einem fluiden Meßstoff, beispielsweise nämlich durch Druckschwankungen innerhalb des Meßstoffs, bewirkte Kraft in eine die Gestaltänderung der Oberfläche des Funksensors bewirkende Verformung der Membran zu wandeln.

Nach einer dreizehnten Ausgestaltung der Wandlervorrichtung der Erfindung ist ferner vorgesehen, daß der Verformungskörper röhrenförmig ausgebildet ist.

Nach einer vierzehnten Ausgestaltung der Wandlervorrichtung der Erfindung ist ferner vorgesehen, daß der Verformungskörper ein, insb. zumindest abschnittsweise gebogenes und/oder zumindest abschnittsweise gerades, Rohr aufweist bzw. mittels eines, insb. zumindest abschnittsweise gebogenen und/oder zumindest abschnittsweise geraden, Rohres gebildet ist.

Nach einer fünfzehnten Ausgestaltung der Wandlervorrichtung der Erfindung ist ferner vorgesehen, daß der, insb. röhrenförmig ausgebildete bzw. mittels eines Rohrs gebildete, Verformungskörper ein von einer, insb. metallischen, Wandung umhülltes Lumen aufweist, daß dafür eingerichtet ist, einen fluiden, insb. zumindest zeitweise strömenden, Meßstoff zu führen. Diese Ausgestaltung der Erfindung weiterbildend ist ferner vorgesehen, daß der Funksensor auf einer dem Lumen abgewandten Seite der Wandung positioniert ist und/oder daß der Funksensormit der Wandung verbunden ist.

Nach einer sechzehnten Ausgestaltung der Wandlervorrichtung der Erfindung ist ferner vorgesehen, daß der Funksensor wenigstens einen, beispielsweise mit wenigstens einer Antenne elektrisch verbundenen, Interdigitalwandler aufweist.

Nach einer siebzehnten Ausgestaltung der Wandlervorrichtung der Erfindung ist ferner vorgesehen, daß der Funksensor wenigsten eine, insb. mit wenigstens einem Interdigitalwandler elektrisch verbundene, Antenne zum Konvertieren von damit empfangenen elektromagnetischen Freiraumwellen in eine leitungsgeführte elektrische Wechselspannung und/oder zum Konvertieren einer angelegten elektrischen Wechselspannung in vom Funksensor abgehende elektromagnetische Freiraumwellen aufweist.

Nach einer ersten Weiterbildung der Erfindung umfaßt die Wandlervorrichtung weiters: einen, insb. auf dem Verformungskörper positionierten und/oder stoffschlüssig damit verbundenen, Aktuator, der dafür eingerichtet ist, den Verformungskörper elastisch zu verformen, beispielsweise derart, daß der Verformungskörper zumindest zeitweise mechanischen Schwingungen um eine statische Ruhelage ausführt und/oder derart, daß der Verformungskörper zumindest zeitweise aus einer statischen Ruhelage ausgelenkt wird.

Nach einer zweiten Weiterbildung der Erfindung umfaßt die Wandlervorrichtung weiters: wenigstens einen weiteren (zweiten) Funksensor. Nach einer weiteren der Ausgestaltung dieser Weiterbildung der Erfindung ist ferner vorgesehen, daß jeder der wenigstens zwei Funksensoren jeweils eine vorgegebene Bandbreite und eine vorgegebene Mittenfrequenz aufweist, insb. nämlich eine Mittenfrequenz, die von der Mittenfrequenz des jeweils anderen um mehr abweicht als eine Summe der Bandbreiten der beiden Funksensoren abweicht.

Nach der Erfindung umfaßt die Wandlervorrichtung: wenigstens eine in einem, beispielsweise festen, Abstand zum Funksensor positionierte, beispielsweise eine Antenne aufweisende, Sende- und Empfangseinrichtung, die dafür eingerichtet ist, eine angelegte elektrische Wechselspannung in in Richtung des Funksensor propagierende elektromagnetische Freiraumwellen zu transformieren, und die dafür eingerichtet ist, vom Funksensor abgehende elektromagnetische Freiraumwellen zu empfangen und in eine leitungsgeführte elektrische Wechselspannung zu transformieren.

Nach der Erfindung ist vorgesehen, daß die Sende- und Empfangseinrichtung einen in einem, insb. festen, Abstand zum Funksensor positionierten, insb. mittels eines Metallrohrs gebildeten und/oder als Hohlleiter ausgebildeten, Wellenleiter aufweist, welcher Wellenleiter dafür eingerichtet ist, elektromagnetische Wanderwellen zu führen und an einem dem Funksensor zugewandten Ende in in Richtung nämlichen Funksensors propagierende elektromagnetische Freiraumwellen zu transformieren, und welcher Wellenleiter dafür eingerichtet ist, vom Funksensor abgehende elektromagnetische Freiraumwellen über nämliches Ende zu empfangen und in im Wellenleiter propagierende elektromagnetische Wanderwellen zu transformieren.

Nach einer dritten Weiterbildung der Erfindung umfaßt die Wandlervorrichtung weiters: wenigsten eine in einem, beispielsweise festen, Abstand zum Funksensor positionierte, beispielsweise eine Antenne und/oder einen Wellenleiter aufweisende, Sende- und Empfangseinrichtung, sowie eine sowohl mit dem Verformungskörper als auch der Sende- und Empfangseinrichtung mechanisch verbundene, beispielsweise mittels eines Anschlußstutzens gebildete, Halteeinrichtung zum Fixieren einer Position und einer Lage der Sende- und Empfangseinrichtung relativ zum in statischen Ruhelage befindlichen Verformungskörper bzw. dem damit verbundenen Funksensor, wobei die Sende- und Empfangseinrichtung dafür eingerichtet ist, eine angelegte elektrische Wechselspannung in in Richtung des Funksensor propagierende elektromagnetische Freiraumwellen zu transformieren, und wobei die Sende- und Empfangseinrichtung dafür eingerichtet ist, vom Funksensor abgehende elektromagnetische Freiraumwellen zu empfangen und in eine leitungsgeführte elektrische Wechselspannung zu transformieren.

Nach einer ersten Ausgestaltung des Meßsystems der Erfindung ist ferner vorgesehen, daß die Wandlervorrichtung in einem Anschlußstutzen eines Prozeßbehälters, beispielsweise nämlich eine Rohrleitung oder einen Tank, positioniert ist, insb. derart, daß der Verformungskörper zumindest teilweise in ein Lumen nämlichen Prozeßbehälters hineinragt bzw. daß der Verformungskörper von einem in nämlichem Prozeßbehälter geführten Meßstoff kontaktiert werden kann.

Nach einer zweiten Ausgestaltung des Meßsystems der Erfindung ist ferner vorgesehen, daß die Meßelektronik eingerichtet ist, zum Erfassen wenigstens einer physikalischen Meßgröße eines zumindest zeitweise strömenden fluiden Meßstoffs - beispielsweise nämlich zum Erfassen einer Temperatur eines fluiden Meßstoffs und/oder zum Erfassen einer Dichte eines fluiden Meßstoffs und/oder zum Erfassen eines Drucks in einem fluiden Meßstoff und/oder zum Erfassen einer Strömungsgeschwindigkeit eines in einer Rohrleitung geführten fluiden Meßstoffs und/oder zum Erfassen von Druckschwankungen in einer in einem strömenden fluiden Meßstoff ausgebildeten Kármánscher Wirbelstrasse - basierend auf einer im Meßsignal enthaltenen Laufzeitinformation einen eine Frequenz einer periodischen Gestaltänderung des Funksensors quantifizierenden Meßwert zu ermitteln und/oder basierend auf einem im Meßsignal enthaltenen Amplitudenspektrum einen einen ein Ausmaß einer momentanen Gestaltänderung des Funksensors quantifizierenden Meßwert zu ermitteln.

Die Erfindung sowie vorteilhafte Ausgestaltungen davon werden nachfolgend anhand von Ausführungsbeispielen näher erläutert, die in den Figuren der Zeichnung dargestellt sind. Gleiche bzw. gleichwirkende oder gleichartig fungierende Teile sind in allen Figuren mit denselben Bezugszeichen versehen; wenn es die Übersichtlichkeit erfordert oder es anderweitig sinnvoll erscheint, wird auf bereits erwähnte Bezugszeichen in nachfolgenden Figuren verzichtet. Weitere vorteilhafte Ausgestaltungen oder Weiterbildungen, insb. auch Kombinationen zunächst nur einzeln erläuterter Teilaspekte der Erfindung, ergeben sich ferner aus den Figuren der Zeichnung und/oder aus den Ansprüchen an sich.

Im einzelnen zeigen:
- Fig. 1, 2: schematisch im Schnitt jeweils ein Meßsystem mit einer Wandlervorrichtung zum Messen eines fluiden Meßstoffs;
- Fig. 3a, b, c: einen für die Bildung eines Meßsystems bzw. einer Wandlervorrichtung gemäß den Fig. 1, 2 bzw. 4 geeigneten Verformungskörper;
- Fig. 4: schematisch im Schnitt eine weitere Variante eines Meßsystem mit einer Wandlervorrichtung zum Messen eines fluiden Meßstoffs;
- Fig. 5: schematisch einen für die Bildung eines Meßsystems bzw. einer Wandlervorrichtung gemäß den Fig. 1, 2 bzw. 4 geeigneten Funksensor; und
- Fig. 6: schematisch eine Anordnung von zwei für die Bildung eines Meßsystems bzw. einer Wandlervorrichtung gemäß den Fig. 1, 2 bzw. 4 geeigneten Funksensoren.

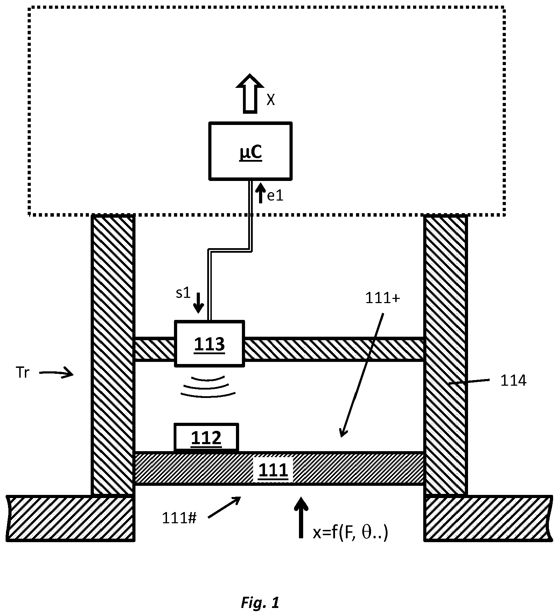

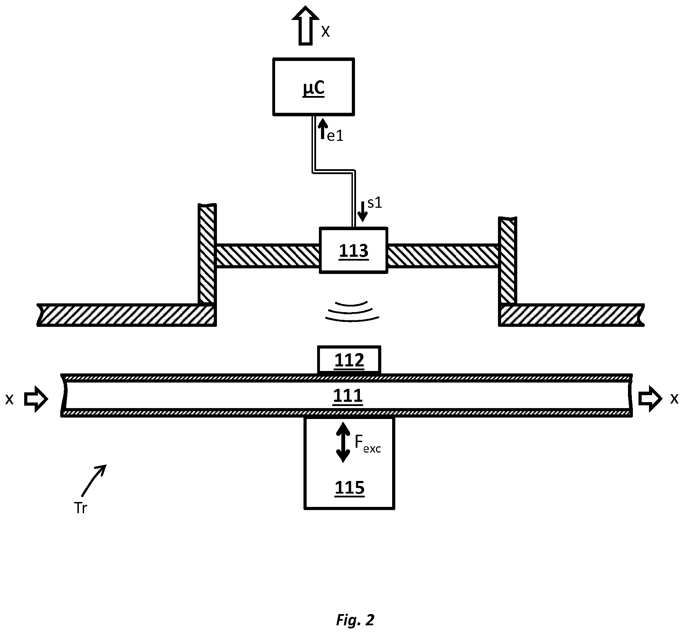

In der Fig. 1 und 2 ist schematisch jeweils ein mittels einer einen, insb. monolithischen, Verformungskörper 111 und einen stoffschlüssig damit verbundenen Funksensor 112 aufweisenden Wandlervorrichtung Tr gebildetes Meßsystem gezeigt. Zusätzlich zur vorbezeichneten Wandlervorrichtung Tr umfaßt das Meßsystem, wie auch in den Fig. 1 bzw. 2 dargestellt, desweiteren eine mit der Wandlervorrichtung Tr elektrisch gekoppelte, beispielsweise mittels eines Mikroprozessors und/oder eines digitalen Signalprozessors (DSP) gebildete, Meßelektronik µC.

Nämliche Meßelektronik µC ist sowohl dafür eingerichtet, wenigstens ein die Wandlervorrichtung Tr speisendes und/oder ansteuerndes elektrisches Treibersignal s1 zu generieren und in die Wandlervorrichtung Tr einzukoppeln, als auch dafür, ein von der Wandlervorrichtung geliefertes Meßsignal e1 zu empfangen und auszuwerten.

Die Wandlervorrichtung Tr bzw. das damit gebildete Meßsystem sind im besonderen dafür vorgesehen bzw. eingerichtet, wenigstens eine, insb. zeitlich veränderliche, physikalische Meßgröße x eines fluiden Meßstoffs, beispielsweise auch eines zumindest zeitweise strömenden und/oder zumindest zeitweise eine Meßstoff-Tempratur θ von mehr als 400°C aufweisenden fluiden Meßstoffs, zu erfassen bzw. zu messen, beispielsweise nämlich wenigstens einen die Meßgröße x repräsentierenden, insb. digitalen, Meßwert X zu generieren bzw. fortwährend solche Meßwerte X zu ermitteln und auszugeben. Die Meßwerte X können beispielsweise mittels einer in der Meßelektronik µC vorgesehenen Anzeigeeinrichtung vor Ort visualisiert und/oder - drahtgebunden via ggf. angeschlossenen Feldbus und/oder drahtlos per Funk - an ein elektronisches Datenverarbeitungssystem, etwa eine speicherprogrammierbare Steuerung (SPS) und/oder einen Prozeßleitstand, übermittelt werden.

Die Wandlervorrichtung Tr kann ferner dafür eingerichtet sein, in einem Anschlußstutzen eines Prozeßbehälters, beispielsweise einem Tank oder eine Rohrleitung, positioniert zu werden bzw., wie u.a. auch in Fig. 1 schematisiert dargestellt, in einem Anschlußstutzen eines Prozeßbehälters positioniert sein, beispielsweise derart, daß der Verformungskörper zumindest teilweise in ein Lumen nämlichen Prozeßbehälters hineinragt bzw. daß der Verformungskörper von einem in nämlichem Prozeßbehälter geführten Meßstoff kontaktiert werden kann bzw. kontaktiert wird.

Der vorbezeichnete Prozeßbehälterkann beispielsweise als Anlagenkomponente eines Wärmeversorgungsnetzes oder eines Turbinenkreislaufes ausgebildet, mithin kann der Meßstoff beispielsweise Dampf, insb. auch gesättigter Dampf oder überhitzter Dampf, oder beispielsweise auch ein aus einer Dampfleitung abgeführtes Kondensat sein. Meßstoff kann aber beispielsweise auch ein Thermalöl oder beispielsweise eine Salzschmelze sein. Als Material für den Verformungskörper 111 kommen im besonderen Metalle, beispielsweise nämlich ein Edelstahl, Titan, Tantal oder eine Nickelbasislegierung, bzw. hochfeste technische Keramiken, beispielsweise nämlich (Metall-Oxid-Keramiken, wie etwa Aluminiumoxid-Keramiken (Al₂O₃) oder Zirkonoxid-Keramiken(ZrO₂), in Frage. Die stoffschlüssige Verbindung von Verformungskörper 111 und Funksensor 112 kann z.B. eine Lötverbindung oder beispielsweise eine durch Kleben hergestellte adhäsive Verbindung sein.

Bei der mittels der Wandlervorrichtung Tr zu erfassenden Meßgröße wiederum kann es sich z.B. um eine einen Druck p, eine Temperatur θ, eine Viskosität und/oder eine Dichte ρ eines fluiden Meßstoff oder beispielsweise auch um eine Strömungsgeschwindigkeit u eines in einer Rohrleitung geführten fluiden Meßstoffs bzw. von einer Strömungsgeschwindigkeit abhängige, beispielsweise auch zumindest zeitweise periodische, Druckschwankungen p(t) in einer im strömenden fluiden Meßstoff ausgebildeten Kármánscher Wirbelstrasse handeln. Dementsprechend kann das Meßsystem auch als ein Druck- oder ein Temperatur-Meßgerät oder beispielsweise auch als ein Vortex-Durchflußmeßgerät, ein vibronisches Dichte- und/oder Viskositäts-Meßgerät oder ein sonarbasiert arbeitendes bzw. vom Meßstoff induzierten Schall auswertendes Durchfluß-Überwachungsgerät ausgebildet bzw. mittels eines solchen Meß- bzw. Überwachungsgeräts gebildet sein. Dementsprechend kann der Verformungskörper 111, wie auch in Fig. 1 angedeutet, beispielsweise zumindest abschnittsweise membranartig bzw. scheibenförmigen ausgebildet sein. Alternativ dazu kann der Verformungskörper aber beispielsweise auch röhrenförmig ausgebildet sein, beispielsweise auch derart, daß der Verformungskörper 111, wie in Fig. 2 dargestellt, ein von einer Wandung umhülltes Lumen aufweist, daß dafür eingerichtet ist, den vorbezeichneten, ggf. auch zumindest zeitweise strömenden Meßstoff zu führen. Daher weist der Verformungskörper 111 gemäß einer weiteren Ausgestaltung der Erfindung eine, beispielsweise auch kreisscheibenförmige, Membran 111a auf bzw. ist der Verformungskörper 111 mittels einer solchen Membran 111a gebildet. Nach einer anderen Ausgestaltung der Erfindung weist der Verformungskörper 111 ein Rohr auf bzw. ist der Verformungskörper 111 mittels eines Rohres gebildet. Nämliches Rohr kann beispielsweise zumindest abschnittsweise gebogen und/oder, wie auch in Fig. 2 gezeigt, zumindest abschnittsweise gerade sein. Darüberhinaus kann das Rohr bzw. der damit gebildete Verformungskörper auch dafür eingerichtet sein, in den Verlauf der vorbezeichneten Rohrleitung eingesetzt zu werden, beispielsweise nämlich mittels Flanschverbindung an den Meßstoff zu- bzw. den Meßstoff wegführende Segmente nämlicher Rohrleitung angeschlossen zu werden. Der Funksensor 112 kann in diesem Fall mit der Wandung des den Verformungskörper bildenden Rohrs verbunden bzw. auf auf einer dem Lumen abgewandten Seite nämlicher Wandung positioniert sein.

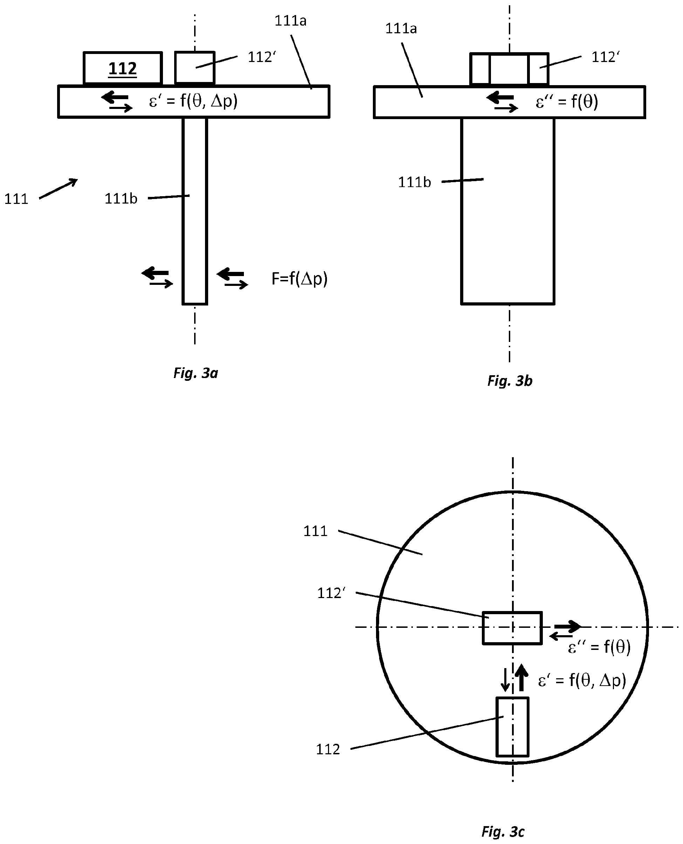

Für den vorbezeichneten Fall, daß der Verformungskörper mittels einer Membran 111a gebildet ist bzw. daß es sich bei dem mittels der Wandlervorrichtung Tr gebildeten Meßsystem um ein Vortex-Durchflußmeßgerät handelt, weist der Verformungskörper 111 nach einer weiteren Ausgestaltung der Erfindung ferner eine, beispielsweise und/oder zumindest abschnittsweise keilförmige und/oder zumindest abschnittsweise stabförmige, Sensorfahne 111a auf bzw. ist der der Verformungskörper 111 mittels einer solchen Sensorfahne 111b gebildet. Nämliche Sensorfahne ist, wie in Fig. 3a, 3b bzw. 3c gezeigt bzw. aus einer Zusammenschau Fig. 1, 3a, 3b bzw. 3c ohne weiteres ersichtlich, auf einer dem Funksensor 112 abgewandten Seite der Membran positioniert und zudem dafür eingerichtet, eine darauf einwirkende Kraft F, beispielsweise nämlich aus Druckschwankungen p(t) in einer Kärmänscher Wirbelstrasse resultierende alternierende Kraft, in eine die Gestaltänderung der Oberfläche des Funksensors 112 bewirkende Verformung ε der Membran zu wandeln. Dementsprechend ist die Sensorfahne 111a nach einer weiteren Ausgestaltung dafür eingerichtet, in ein Lumen eines Rohr eingesetzt bzw. von einem in einem Lumen eines Rohr strömenden fluiden Meßstoff umströmt zu werden. Für den anderen erwähnten Fall, daß der Verformungskörper mittels eines Rohrs gebildet ist bzw. daß es sich bei dem mittels der Wandlervorrichtung gebildeten Meßsystem um ein vibronisches Dichte-Meßgerät und/oder ein vibronisches Viskosität-Meßgerät handelt, ist der Verformungskörper nach einer weiteren Ausgestaltung dafür eingerichtet ist, zum Bewirken der zeitlich ändernden Gestaltänderungen der Oberfläche des Funksensors vibrieren gelassen zu werden (Fig. 2), bzw. ist vorgesehen, daß die Wandlervorrichtung weiters einen, beispielsweise direkt auf dem Verformungskörper 111 positionierten und/oder stoffschlüssig damit verbundenen und/oder hochtemperaturtauglichen, Aktuator 115, umfaßt, der dafür eingerichtet ist, den Verformungskörper elastisch zu verformen, insb. derart, daß der Verformungskörper zumindest zeitweise mechanischen Schwingungen um eine statische Ruhelage ausführt und/oder derart, daß der Verformungskörper zumindest zeitweise aus einer statischen Ruhelage ausgelenkt wird. Nämlicher Aktuator kann beispielsweise mittels eines piezoelektrischen Stapelantriebs oder beispielsweise mittels einer Tauchankerspule gebildet sein.

Bei der erfindungsgemäßen Wandlervorrichtung Tr ist der Funksensor 112, wie auch in Fig. 2 angedeutet bzw. aus einer Zusammenschau der Fig. 1 und 2 ohne weiteres ersichtlich, auf dem Verformungskörper 111 positioniert, derart, daß der Funksensor 112 eine dem Verformungskörper abgewandte, freie Oberfläche aufweist. Der Funksensor 112 ist ferner dafür eingerichtet, elektromagnetische Freiraumwellen, insb. Freiraumwellen mit einer in einem Frequenzbereich zwischen 1 GHz und 10 GHz liegenden Trägerfrequenz, zu empfangen und in entlang der dem Verformungskörper abgewandte Oberfläche propagierende akustische Oberflächenwellen zu konvertieren, bzw. entlang nämlicher Oberfläche propagierende akustische Oberflächenwellen in elektromagnetische Freiraumwellen zu konvertieren. Der Funksensor 112 kann beispielsweise mittels wenigstens eines, insb. mit wenigstens einer Antenne elektrisch verbundenen, Interdigitalwandlers gebildet sein, beispielsweise mit einem Trägersubstrat aus Langasit (La₃Ga₅SiO₁₄) und darauf angeordneten Platinelektroden bzw. hinsichtlich des prinzipiellen Aufbaus und der prinzipiellene Funktionsweise einem der in der DE-A 10 2007 021 172, der DE-A 42 00 076 oder in der EP-A 1 752 916 gezeigten Funksensoren (SAW) entsprechen. Demenstprechend weist der Funksensor 112 gemäß einer weiteren Ausgestaltung der Erfindung wenigsten eine, insb. mit wenigstens eine, beispielsweise mit dem vorbezeichneten Interdigitalwandler elektrisch verbundene, Antenne zum Konvertieren von damit empfangenen elektromagnetischen Freiraumwellen in eine leitungsgeführte elektrische Wechselspannung und/oder zum Konvertieren einer angelegten elektrischen Wechselspannung in vom Funksensor 112 abgehende elektromagnetische Freiraumwellen auf. Bei der vorbezeichneten Antenne kann es ich beispielsweise um eine Drahtantenne, eine Planarantenne oder beispielsweise eine Schlitzantennen handeln.

Zwecks Generierung bzw. Verarbeitung von innerhalb der Wandlervorrictung Tr propagierenden elektromagnetische Freiraumwellen umfaßt die Wandlervorrichtung nach der Erfindung desweiteren wenigsten eine in einem, insb. festen, Abstand zum Funksensor positionierte, einen Wellenleiter aufweisende, Sende- und Empfangseinrichtung 113. Nämliche Sende- und Empfangseinrichtung 113 ist im besonderen dafür eingerichtet, eine angelegte elektrische Wechselspannung in in Richtung des Funksensor 112 propagierende elektromagnetische Freiraumwellen zu transformieren bzw. dafür, vom Funksensor 112 abgehende elektromagnetische Freiraumwellen zu empfangen und in eine leitungsgeführte elektrische Wechselspannung zu transformieren. Ferner umfaßt Wandlervorrictung Tr eine sowohl mit dem Verformungskörper als auch der Sende- und Empfangseinrichtung 113 mechanisch verbundenen, beispielsweise nämlich mittels eines Anschlußstutzens gebildeten, Halteeinrichtung 114 zum Fixieren einer Position und einer Lage der Sende- und Empfangseinrichtung 113 relativ zu dem in statischen Ruhelage befindlichen Verformungskörper 111 bzw. dem damit verbundenen Funksensor 112. Die Halteeinrichtung 114 kann beispielsweise als ein Anschlußstutzen für ein die vorbezeichnete Meßelektronik µC aufnehmendes Elektronik-Gehäuse ausgebildet bzw. dafür eingerichtet sein, sowohl die Sende- und Empfangseinrichtung 113 als auch das vorbezeichnete Elektronik-Gehäuse zu haltern.

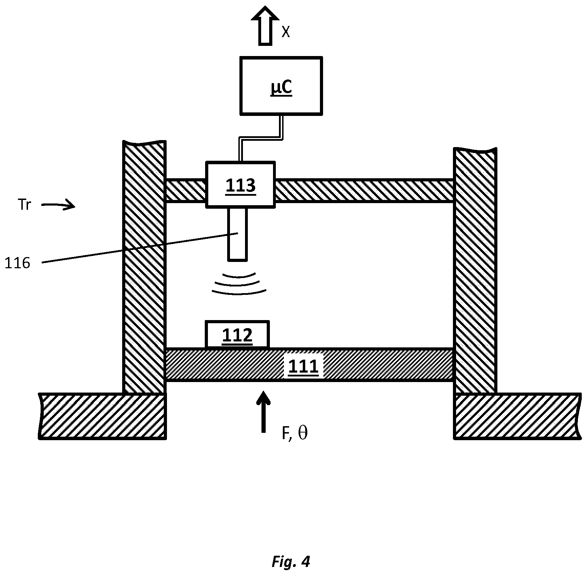

Zur Vermeidung von Störeinflüsse durch allfällige elektromagnetische Fremdfelder im Nahbereich der Wandlereinrichtung Tr bzw. innerhalb derselben weist die die Sende- und Empfangseinrichtung 113 nach der Erfindung und wie auch in Fig. 4 schematisiert dargestellt, einen in einem Abstand zum Funksensor 112 positionierten, beispielsweise nämlich mittels eines Metallrohrs gebildeten und/oder als Hohlleiter ausgebildeten, Wellenleiter 116 auf, der dafür eingerichtet ist, elektromagnetische Wanderwellen zu führen und an einem dem Funksensor 112 zugewandten Ende in in Richtung nämlichen Funksensors 112 propagierende elektromagnetische Freiraumwellen zu transformieren, und der dafür eingerichtet ist, vom Funksensor 112 abgehende elektromagnetische Freiraumwellen über nämliches Ende zu empfangen und in im Wellenleiter propagierende elektromagnetische Wanderwellen zu transformieren. Der Wellenleiter 116 kann in vorteilhafter Weise so positioniert sein, daß dessen dem Funksensor 112 zugewandtes - proximales - Ende sehr nahe an den Funksensor 112, beispielsweise nämlich dessen Antenne, heranreicht bzw. einen nur geringen Abstand von wenigen Millimetern, beispielsweise von weniger als 20 mm, insb. nämlich weniger als 10 mm, aufweist. Zudem kann der Wellenleiter 116 in vorteilhafter Weise so ausgebildet sein, daß anderseits ein dem Funksensor 112 abgewandtes - distales - Ende sehr relativ weit entfernt vom Funksensor 112 positioniert ist, beispielsweise nämlich in einem Abstand von mehr als 30 mm, insb. mehr als 50 mm, mithin kann der Wellenleiter eine Länge, gemessen als kürzester Abstand zwischen proximalen und distalen Ende entsprechend mehr als 30 mm, insb. mehr als 50 mm beträgt. Dadurch wird es auf sehr einfache, gleichwohl effektive Weise ermöglicht, elektronische Bauelemente bzw. Baugruppen der Sende- und Empfangseinrichtung 113 in einem vergleichsweise großen, jedenfalls aber für den Erhalt der Betriebstüchtigkeit der Sende- und Empfangseinrichtung 113 ausreichenden Abstand von dem ggf. extrem heißen Verformungskörper bzw. Funksensor anzuordnen, ohne den für die eigentliche Übertragung der elektromagnetische Freiraumwellen zwischen Funksensor und Sende- und Empfangseinrichtung etablierten Abstand zu Lasten einer Störunempfindlichkeit der Wandlereinrichtung gegenüber den erwähnten elektromagnetischen Fremdfelder wieder erhöhen zu müssen.

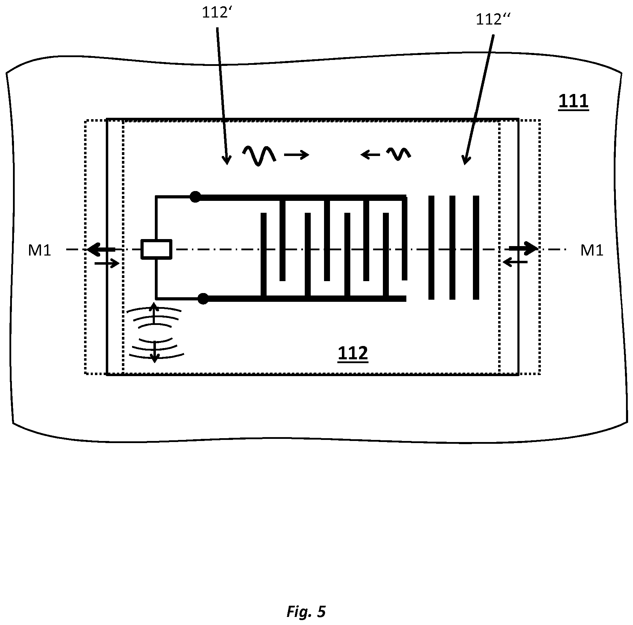

Nach einer weiteren Ausgestaltung der Erfindung ist der Funksensor 112, wie auch in Fig. 5 schematisiert dargestellt, im besonderen dafür eingerichtet, empfangene elektromagnetische Freiraumwellen in dazu zeitverzögert abgehende, beispielsweise nämlich um wenigstens 1 µs (Mikrosekunde) zeitverzögert abgehende, elektromagnetische Freiraumwellen zu konvertieren bzw. ist der Funksensor 112 dafür eingerichtet, entlang der Oberfläche propagierende akustische Oberflächenwellen zu reflektieren, beispielsweise derart, daß von einer Sende- und Empfangszone 112' abgehende akustische Oberflächenwellen mittels einer davon entfernten Reflektorzone 112" in dazu, beispielsweise um wenigstens 1 µs (Mikrosekunde), zeitverzögert auf nämliche Sende- und Empfangszone 112' auftreffende akustische Oberflächenwellen zu konvertieren. Nach einer weiteren Ausgestaltung der Erfindung ist die Meßelektronik dementsprechend ferner eingerichtet, das Treibersignal e1 mit einer getakteten Spannung zu generieren und in die Wandlervorrichtung Tr einzukoppeln. Das Treibersignal kann dementsprechend beispielsweise eine Spannung aufweisen, die als eine Folge von in einem vorgegebenen Takt bzw. einer vorgegebenen Schußrate zu Pulspaketen formierten rechteckförmigen oder sinusförmigen Spannungspulsen ausgebildet ist. Nämlicher Takt kann beispielsweise auch einstellbar, mithin im Betrieb veränderlich sein. Ferner kann die Meßelektronik auch dafür eingerichtet sein, die vorbezeichneten Pulspakete mit einem zumindest vorübergehend konstanten Takt bzw. mit einer Schußrate von mehr als 8 kHz, beispielsweise auch mehr als 20 kHz, zu generieren.

Der Verformungskörper 111 ist ferner dafür eingerichtet, in Abhängigkeit einer darauf einwirkenden, insb. zeitlich veränderlichen, mechanischen Kraft und/oder in Abhängigkeit einer Temperaturänderung bzw. zeitlich veränderlichen Temperaturverteilung innerhalb der Wandlervorrichtung zumindest teilweise verformt, beispielsweise nämlich gedehnt und/oder aus einer statischen Ruhelage bzw. einer Nulllage ausgebogen, zu werden. Die erfindungsgemäße Wandlervorrichtung Tr ist darüberhinaus im besonderen so ausgestaltet, daß, wie auch in Fig. 2 schematisiert dargestellt bzw. aus einer Zusammenschau der Fig. 1 und 5 oder der Fig. 2 und 5 ohne weiteres ersichtlich, durch das vorbezeichnete Verformen des Verformungskörpers 111 zumindest die dem Verformungskörper 111 abgewandte Oberfläche des Funksensors 112 eine - ebenfalls von der in den Verformungskörper 111 eingeleiteten Kraft bzw. von der Temperaturänderung des Verformungskörpers 111 abhängige - eine Ausbreitung, beispielsweise nämlich einen Ausbreitungspfad bzw. eine Laufzeit, von entlang nämlicher Oberfläche propagierenden akustischen Oberflächenwellen beeinflussende Gestaltänderung erfährt. Nach einer weiteren Ausgestaltung der Erfindung sind der Verformungskörper 111 und der Funksensor 112 ferner so ausgestaltet, daß die vorbezeichneten, insb. zeitlich ändernden, Verformungen bzw. Gestaltänderungen zumindest bei innerhalb eines vorgegebenen oder für die Wandlervorrichtung spezifizierten Kräften und/oder Temperaturänderungen jeweils reversibel sind. Der Funksensor 112 weist zudem wenigstens eine Hauptmeßrichtung M1, nämlich eine gedachte Sensorachse auf, die einer Ausrichtung einer die entlang der Oberfläche propagierenden akustischen Oberflächenwellen maximal-sensitiv bzw. maximal-empfindlich beeinflussenden Gestaltänderung entspricht.

Nach einer weiteren Ausgestaltung der Erfindung ist der Verformungskörper 111 im besonderen dafür eingerichtet, auf eine darauf - insb. zumindest zeitweise mit einem periodisch ändernden Betrag und/oder zumindest zeitweise mit einer periodisch ändernden Wirkrichtung - einwirkende zeitlich veränderliche mechanische Kraft, beispielsweise nämlich durch einen den Verformungskörper kontaktierenden fluiden Meßstoff bewirkte Kraft, mit zeitlich ändernden elastischen Verformungen zu reagieren, insb. nämlich mit zeitlich ändernden elastischen Verformungen, die zeitlich ändernde Gestaltänderungen der Oberfläche des Funksensors bewirken und/oder mit mechanischen Schwingungen um eine statische Ruhelage zu reagieren, insb. nämlich mit mechanischen Schwingungen um eine statische Ruhelage, die zeitlich ändernde Gestaltänderungen der Oberfläche des Funksensors bewirken.

Zwecks Generierung des wenigstens einen Meßwerts X (bzw. der Meßwerte) ist die Meßelektronik nach einer weiteren Ausgestaltung der Erfindung dafür eingerichtet, das Meßsignal e1 dadurch auszuwerten, indem die Meßelektronik anhand nämlichen Meßsignals e1 ein ein Ausmaß einer momentanen Gestaltänderung des Funksensors quantifizierenden Meßwert Xₓ und/oder einen eine Frequenz einer periodischen Gestaltänderung des Funksensors quantifizierenden Meßwert ermittelt. Nach einer weiteren Ausgestaltung der Erfindung ist die Meßelektronik im besonderen auch dafür eingerichtet, basierend auf einer im Meßsignal e1 enthaltenen Laufzeitinformation einen eine Frequenz einer periodischen Gestaltänderung des Funksensors quantifizierenden Meßwert zu ermitteln und/oder basierend auf einem im Meßsignal e1 enthaltenen Amplitudenspektrum einen einen ein Ausmaß einer momentanen Gestaltänderung des Funksensors quantifizierenden Meßwert zu ermitteln. Zur Ermittlung des die Frequenz einer periodischen Gestaltänderung des Funksensors quantifizierenden Meßwerts können beispielsweise etablierte Laufzeitmeßverfahren angewendet bzw. mittels der Meßelektronik umgesetzt werden. Das vorbezeichnete im Meßsignal e1 enthaltenen Amplitudenspektrum wiederum kann beispielsweise mittels einer in der Meßelektronik umgesetzten diskreten Fouriertransformation berechnet und hernach entsprechend analysiert, beispielsweise hinsichtlich des einer Lage, Form und/oder Höhe eines maximalen Spitzenwerts ausgewertet werden.

Die die vorbezeichnete Gestaltänderung des Funksensors 112 bzw. von Verformungskörper 111 und Funksensor 112 bewirkende Kraft F bzw. Temperaturänderung θ kann, wie bereits erwähnt bzw. auch in den Fig. 1 und 2 jewiels angedeutet, über eine dem Funksensor abgewandte bzw. dem Meßstoff (bzw. einem dem Führen des Meßstoff dienlichen Lumen der erwähnten Rohrleitung) zugewandte Seite des Verformungskörper eingeleitet sein. Dementsprechend ist der Verformungskörper 111 nach einer weiteren Ausgestaltung der Erfindung ferner dafür eingerichtet, auf einer dem Funksensor abgewandten Seite von einem, beispielsweise zumindest zeitweise strömenden, fluiden Meßstoff kontaktiert zu werden, insb. derart, daß nämliche Gestaltänderung der Oberfläche des Funksensors 112 zumindest anteilig durch eine vom fluiden Meßstoff auf den Verformungskörper übertragene Kraft und/oder durch eine zwischen Meßstoff und Verformungskörper etablierte Wärmeübertragung bewirkt ist. Nicht zuletzt zwecks Erfassung von Temperaturänderungen θ kann es zudem von Vorteil bzw. erforderlich sein, beispielsweise zwecks Erfassung auch von bezüglich der statischen Ruhelage Verformungskörper 111 negativen Temperaturänderungen, daß der Verformungskörper 111 auch in statischer Ruhelage mechanisch vorgespannt, beispielsweise nämlich elastisch gedehnt, ist.

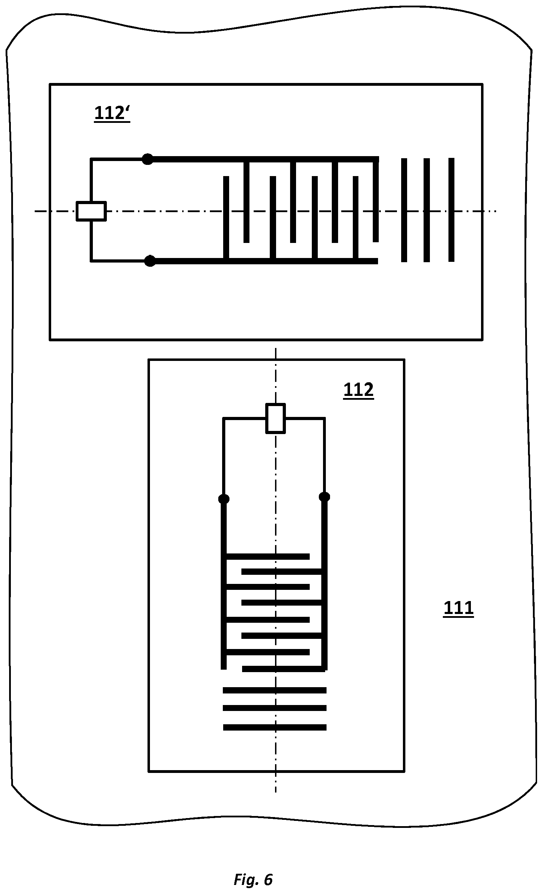

Nicht zuletzt für den vorbezeichneten Fall, daß mittels der Wandlervorrichtung bzw. dem damit gebildten Meßsystem sowohl eine auf den Verformunsgkörper 111 wirkende Kraft F als auch eine Temperaturänderung nämlichen Verformunsgkörpers 111 erfaßt werden sollen, umfaßt die Wandlervorrichtung nach einer weiteren Ausgestaltung wenigstens einen weiteren - zweiten - Funksensor 112'. Zwecks einer möglichst einfachen Separierung der mittels des - ersten - Funksensors 112 bzw. mittels des Funksensor 112' jeweils generierten akustische Oberflächenwellen bzw. der damit jeweils korrespondierenden Anteile in den von der Sende- und Empfangseinrichtung 113 empfangen elektromagnetische Freiraumwellen bzw. der entsprechend korrespondierenden Signalkomponenten im Meßsignale e1 weist jeder der wenigstens zwei Funksensoren nach einer weiteren Ausgestaltung der Erfindung jeweils eine vorgegebene Bandbreite und eine vorgegebene Mittenfrequenz auf, die von der Mittenfrequenz des jeweils anderen um mehr abweicht als eine Summe der Bandbreiten beider Funksensoren 112, 112'. Die beiden Funksensoren können, wie auch in Fig. 6 gezeigt, zudem so auf dem Verformungskörper angeordnet sein, daß die jeweiligen Meßrichtungen M1 der beiden Funksensoren 112, 112' voneinander abweichen, beispielsweise nämlich zueinander orthogonal sind. Alternativ oder in Ergänzung können die beiden Funksensoren auch so angeordnete sein, daß jeder der Funksensoren in einer Zone des Verformungskörpers positioniert ist, die hinsichtlich des Ausmaßes einer lokalen Gestaltänderung und/oder einer Form nämlicher lokalen Gestaltänderung und/oder die hinsichtlich ihrer Reaktion auf die jeweils zu erfassende Meßgröße x von der jeweils anderen Zone abweicht, beispielsweise auch derart, daß - wie beispielsweise auch aus einer Zusammenschau der Fig. 3a, 3b und 3c ohne weiteres ersichtlich, der Funksensor 112 auf eine sowohl aus einer einwirkenden Kraft F als auch aus einer Temperaturänderung θ resultierende Verformung ε' des Verformungskörpers 111 reagiert und daß der Funksensor 112' lediglich auf eine aus einer Temperaturänderung θ resultierende Verformung ε" des Verformungskörpers 111 reagiert.

## Patentansprüche

1. Wandlervorrichtung, insb. zum Erfassen von Druckschwankungen in einer in einem strömenden Fluid ausgebildeten Kärmänscher Wirbelstrasse, welche Wandlervorrichtung umfaßt:
- einen, insb. zumindest abschnittsweise membranartigen und/oder zumindest abschnittsweise scheibenförmigen und/oder zumindest abschnittsweise rohrförmigen und/oder metallischen, Verformungskörper (111),
- einen auf dem Verformungskörper (111) positionierten und, insb. durch Kleben, stoffschlüssig damit verbundenen Funksensor (112) mit einer dem Verformungskörper abgewandten Oberfläche,
- sowie wenigsten eine in einem, insb. festen, Abstand zum Funksensor positionierte, insb. eine Antenne aufweisende, Sende- und Empfangseinrichtung (113);
- wobei die Sende- und Empfangseinrichtung (113) dafür eingerichtet ist, eine angelegte elektrische Wechselspannung in in Richtung des Funksensor (112) propagierende elektromagnetische Freiraumwellen zu transformieren;
- wobei der Funksensor (112) dafür eingerichtet ist, elektromagnetische Freiraumwellen zu empfangen und in entlang der dem Verformungskörper abgewandte Oberfläche propagierende akustische Oberflächenwellen zu konvertieren;
- wobei der Funksensor (112) dafür eingerichtet ist, entlang nämlicher Oberfläche propagierende akustische Oberflächenwellen in elektromagnetische Freiraumwellen zu konvertieren;
- und wobei der Verformungskörper (111) dafür eingerichtet ist, in Abhängigkeit einer darauf einwirkenden, insb. zeitlich veränderlichen und/oder über eine dem Funksensor abgewandte Seite des Verformungskörper eingeleitete, mechanischen Kraft und/oder in Abhängigkeit einer Temperaturänderung zumindest teilweise verformt, insb. nämlich aus einer statischen Ruhelage ausgebogen und/oder gedehnt, zu werden, derart, daß zumindest die dem Verformungskörper (111) abgewandte Oberfläche des Funksensors (112) eine eine Ausbreitung von entlang nämlicher Oberfläche propagierenden akustischen Oberflächenwellen beeinflussende, insb. zeitlich ändernde und/oder reversible, Gestaltänderung, insb. nämlich eine einen Ausbreitungspfad und/oder eine Laufzeit von entlang nämlicher Oberfläche propagierenden akustischen Oberflächenwellen beeinflussende Gestaltänderung, erfährt;
- und wobei die Sende- und Empfangseinrichtung (113) dafür eingerichtet ist, vom Funksensor (112) abgehende elektromagnetische Freiraumwellen zu empfangen und in eine leitungsgeführte elektrische Wechselspannung zu transformieren;
**dadurch gekennzeichnet, daß** die Sende- und Empfangseinrichtung (113) einen in einem, insb. festen, Abstand zum Funksensor positionierten, insb. mittels eines Metallrohrs gebildeten und/oder als Hohlleiter ausgebildeten, Wellenleiter (116) aufweist,
- der dafür eingerichtet ist, elektromagnetische Wanderwellen zu führen und an einem dem Funksensor (112) zugewandten Ende in in Richtung nämlichen Funksensors (112) propagierende elektromagnetische Freiraumwellen zu transformieren,
- und der dafür eingerichtet ist, vom Funksensor (112) abgehende elektromagnetische Freiraumwellen über nämliches Ende zu empfangen und in im Wellenleiter (116) propagierende elektromagnetische Wanderwellen zu transformieren.

2. Wandlervorrichtung nach dem vorherigen Anspruch,
- wobei der Funksensor (112) dafür eingerichtet ist, empfangene elektromagnetische Freiraumwellen in dazu, insb. um wenigstens 1 µs (Mikrosekunde), zeitverzögert abgehende elektromagnetische Freiraumwellen zu konvertieren; und/oder
- wobei der Funksensor (112) dafür eingerichtet ist, entlang der Oberfläche propagierende akustische Oberflächenwellen zu reflektieren, insb. derart, daß von einer Sende- und Empfangszone abgehende akustische Oberflächenwellen in dazu, insb. um wenigstens 1 µs, zeitverzögert auf nämliche Sende- und Empfangszone auftreffende akustische Oberflächenwellen zu konvertieren; und/oder
- wobei der Verformungskörper (111) dafür eingerichtet ist, auf eine darauf - insb. zumindest zeitweise mit einem periodisch ändernden Betrag und/oder zumindest zeitweise mit einer periodisch ändernden Wirkrichtung - einwirkende zeitlich veränderliche mechanische Kraft mit zeitlich ändernden elastischen Verformungen zu reagieren, insb. nämlich mit zeitlich ändernden elastischen Verformungen, die zeitlich ändernde Gestaltänderungen der Oberfläche des Funksensors bewirken; und/oder
- wobei der Verformungskörper (111) dafür eingerichtet ist, auf eine darauf - insb. zumindest zeitweise mit einem periodisch ändernden Betrag und/oder zumindest zeitweise mit einer periodisch ändernden Wirkrichtung - einwirkende zeitlich veränderliche mechanische Kraft, insb. eine durch einen den Verformungskörper kontaktierenden fluiden Meßstoff bewirkte mechanische Kraft, mit mechanischen Schwingungen um eine statische Ruhelage zu reagieren, insb. nämlich mit mechanischen Schwingungen um eine statische Ruhelage, die zeitlich ändernde Gestaltänderungen der Oberfläche des Funksensors bewirken; und/oder
- wobei der Verformungskörper dafür eingerichtet ist, zum Bewirken der zeitlich ändernden Gestaltänderungen der Oberfläche des Funksensors vibrieren gelassen zu werden; und/oder
- wobei der Verformungskörper in einer statischen Ruhelage mechanisch vorgespannt, insb. nämlich elastisch gedehnt, ist; und/oder
- wobei der Verformungskörper (111) dafür eingerichtet ist, auf einer dem Funksensor abgewandten Seite von einem, insb. zumindest zeitweise strömenden, fluiden Meßstoff kontaktiert zu werden, insb. derart, daß die Gestaltänderung der Oberfläche des Funksensors (112) zumindest anteilig durch eine vom fluiden Meßstoff auf den Verformungskörper übertragene Kraft und/oder durch eine zwischen Meßstoff und Verformungskörper etablierte Wärmeübertragung bewirkt ist; und/oder
- wobei der Verformungskörper (111) zumindest anteilig aus einem Metall, insb. einem Edelstahl, Titan, Tantal oder einer Nickelbasislegierung, besteht; und/oder
- wobei der Verformungskörper (111) zumindest anteilig aus einer Keramik besteht; und/oder
- wobei der Verformungskörper (111) scheibenförmig ausgebildet ist; und/oder
- wobei der Funksensor (112) wenigstens einen, insb. mit wenigstens einer Antenne elektrisch verbundenen, Interdigitalwandler aufweist.

3. Wandlervorrichtung nach einem der vorherigen Ansprüche, weiters umfassend: einen, insb. auf dem Verformungskörper (111) positionierten und/oder stoffschlüssig damit verbundenen, Aktuator (115), der dafür eingerichtet ist, den Verformungskörper elastisch zu verformen, insb. derart, daß der Verformungskörper zumindest zeitweise mechanischen Schwingungen um eine statische Ruhelage ausführt und/oder derart, daß der Verformungskörper zumindest zeitweise aus einer statischen Ruhelage ausgelenkt wird.

4. Wandlervorrichtung nach einem der vorherigen Ansprüche,
- wobei der Verformungskörper (111) eine, insb. kreisscheibenförmige, Membran (111a) aufweist bzw. mittels einer, insb. kreisscheibenförmige, Membran (111a) gebildet ist
- und wobei der Funksensor auf einer Seite der Membran positioniert und mit dieser, insb. durch Kleben, stoffschlüssig verbunden ist.

5. Wandlervorrichtung nach dem vorherigen Anspruch, wobei der Verformungskörper (111) eine, insb. und/oder zumindest abschnittsweise keilförmige und/oder zumindest abschnittsweise stabförmige, Sensorfahne (111b) aufweist bzw. mittels einer, insb. paddelförmigen und/oder zumindest abschnittsweise keilförmigen und/oder zumindest abschnittsweise stabförmigen, Sensorfahne (111b) gebildet ist.

6. Wandlervorrichtung nach dem vorherigen Anspruch,
- wobei die Sensorfahne auf einer dem Funksensor abgewandten Seite der Membran positioniert ist; und/oder
- wobei die Sensorfahne dafür eingerichtet ist, eine darauf einwirkende Kraft in eine die Gestaltänderung der Oberfläche des Funksensors (112) bewirkende Verformung der Membran zu wandeln; und/oder
- wobei die Sensorfahne dafür eingerichtet ist, in ein Lumen eines Rohr eingesetzt bzw. von einem in einem Lumen eines Rohr strömenden fluiden Meßstoff umströmt zu werden.

7. Wandlervorrichtung nach dem vorherigen Anspruch, wobei die Sensorfahne dafür eingerichtet ist, eine darauf einwirkende, von einem fluiden Meßstoff, insb. nämlich durch Druckschwankungen innerhalb des Meßstoffs, bewirkte Kraft in eine die Gestaltänderung der Oberfläche des Funksensors (112) bewirkende Verformung der Membran zu wandeln.

8. Wandlervorrichtung nach einem der Ansprüche 1 bis 3, wobei der Verformungskörper (111) röhrenförmig ausgebildet ist.

9. Wandlervorrichtung nach einem der vorherigen Ansprüche, wobei der Verformungskörper (111) ein, insb. zumindest abschnittsweise gebogenes und/oder zumindest abschnittsweise gerades, Rohr aufweist bzw. mittels eines, insb. zumindest abschnittsweise gebogenen und/oder zumindest abschnittsweise geraden, Rohres gebildet ist.

10. Wandlervorrichtung nach einem der vorherigen Ansprüche, wobei der, insb. röhrenförmig ausgebildete bzw. mittels eines Rohrs gebildete, Verformungskörper (111) ein von einer, insb. metallischen, Wandung umhülltes Lumen aufweist, daß dafür eingerichtet ist, einen fluiden, insb. zumindest zeitweise strömenden, Meßstoff zu führen.

11. Wandlervorrichtung nach dem vorherigen Anspruch,
- wobei der Funksensor (112) auf einer dem Lumen abgewandten Seite der Wandung positioniert ist; und/oder.
- wobei der Funksensor (112) mit der Wandung verbunden ist.

12. Wandlervorrichtung nach einem der vorherigen Ansprüche, weiters umfassend: wenigstens einen weiteren Funksensor (112').

13. Wandlervorrichtung nach dem vorherigen Anspruch, wobei jeder der wenigstens zwei Funksensoren jeweils eine vorgegebene Bandbreite und eine vorgegebene Mittenfrequenz aufweist, insb. eine Mittenfrequenz, die von der Mittenfrequenz des jeweils anderen um mehr abweicht als eine Summe der Bandbreiten der beiden Funksensoren abweicht.

14. Wandlervorrichtung nach einem der vorherigen Ansprüche, wobei der Funksensor (112) wenigsten eine, insb. mit wenigstens einem Interdigitalwandler elektrisch verbundene, Antenne zum Konvertieren von damit empfangenen elektromagnetischen Freiraumwellen in eine leitungsgeführte elektrische Wechselspannung und/oder zum Konvertieren einer angelegten elektrischen Wechselspannung in vom Funksensor (112) abgehende elektromagnetische Freiraumwellen aufweist.

15. Wandlervorrichtung nach dem der vorherigen Anspruch, weiters umfassend: eine sowohl mit dem Verformungskörper als auch der Sende- und Empfangseinrichtung (113) mechanisch verbundene, insb. mittels eines Anschlußstutzens gebildete, Halteeinrichtung zum Fixieren einer Position und einer Lage der Sende- und Empfangseinrichtung (113) relativ zum in statischen Ruhelage befindlichen Verformungskörper bzw. dem damit verbundenen Funksensor (112).

16. Meßsystem, umfassend:
- eine, insb. in einem Anschlußstutzen eines Prozeßbehälters positionierte, Wandlervorrichtung (Tr) nach einem der vorherigen Ansprüche;
- sowie eine mit nämlicher Wandlervorrichtung (Tr), insb. mit dem Wellenleiter der Wandlervorrichtung, elektrisch gekoppelte Meßelektronik (µC),
-- die dafür eingerichtet ist, wenigstens ein die Wandlervorrichtung speisendes und/oder ansteuerndes elektrisches Treibersignal (s1) zu generieren und in die Wandlervorrichtung (Tr), insb. nämlich in eine Antenne der Wandlervorrichtung bzw. einen Wellenleiter der Wandlervorrichtung, einzukoppeln,
-- und die dafür eingerichtet ist, ein von der Wandlervorrichtung, insb. nämlich von einer Antenne der Wandlervorrichtung bzw. einem Wellenleiter der Wandlervorrichtung, geliefertes Meßsignal (e1) zu empfangen und auszuwerten, insb. nämlich mittels des Meßsignals einen ein Ausmaß einer momentanen Gestaltänderung des Funksensors quantifizierenden Meßwert und/oder einen eine Frequenz einer periodischen Gestaltänderung des Funksensors quantifizierenden Meßwert zu ermitteln.

17. Meßsystem nach dem vorherigen Anspruch,
- wobei die Meßelektronik eingerichtet ist, das Treibersignal mit einer getakteten, insb. nämlich als eine Folge von in einem vorgegebenen und/oder einstellbaren und/oder zumindest vorübergehend konstanten Takt zu Pulspaketen formierten rechteckförmigen oder sinusförmigen Spannungspulsen ausgebildeten, Spannung zu generieren und in die Wandlervorrichtung einzukoppeln; und/oder
- wobei die Meßelektronik eingerichtet ist, basierend auf einer im Meßsignal enthaltenen Laufzeitinformation einen eine Frequenz einer periodischen Gestaltänderung des Funksensors quantifizierenden Meßwert zu ermitteln; und/oder
- wobei die Meßelektronik eingerichtet ist, basierend auf einem im Meßsignal enthaltenen Amplitudenspektrum einen einen ein Ausmaß einer momentanen Gestaltänderung des Funksensors quantifizierenden Meßwert zu ermitteln.

18. Meßsystem nach einem der Ansprüche 16 bis 17,
- wobei Wandlervorrichtung in einem Anschlußstutzen eines Prozeßbehälters, insb. nämlich eine Rohrleitung oder einen Tank, positioniert ist, insb. derart, daß der Verformungskörper zumindest teilweise in ein Lumen nämlichen Prozeßbehälters hineinragt bzw. daß der Verformungskörper von einem in nämlichem Prozeßbehälter geführten Meßstoff kontaktiert werden kann; und/oder
- wobei die Meßelektronik eingerichtet ist, zum Erfassen wenigstens einer physikalischen Meßgröße eines zumindest zeitweise strömenden fluiden Meßstoffs, insb. nämlich zum Erfassen einer Temperatur eines fluiden Meßstoffs und/oder zum Erfassen einer Dichte eines fluiden Meßstoffs und/oder zum Erfassen eines Drucks in einem fluiden Meßstoff und/oder zum Erfassen einer Strömungsgeschwindigkeit eines in einer Rohrleitung geführten fluiden Meßstoffs und/oder zum Erfassen von Druckschwankungen in einer in einem strömenden fluiden Meßstoff ausgebildeten Kärmänscher Wirbelstrasse,
-- basierend auf einer im Meßsignal enthaltenen Laufzeitinformation einen eine Frequenz einer periodischen Gestaltänderung des Funksensors quantifizierenden Meßwert zu ermitteln; und/oder
-- basierend auf einem im Meßsignal enthaltenen Amplitudenspektrum einen einen ein Ausmaß einer momentanen Gestaltänderung des Funksensors quantifizierenden Meßwert zu ermitteln.

19. Verwenden einer Wandlervorrichtung gemäß einem der Ansprüche 1 bis 15 oder eines Meßsystems gemäß einem der Ansprüche 16 bis 18 zum Erfassen wenigstens einer physikalischen Meßgröße (x) eines, insb. zumindest zeitweise strömenden und/oder zumindest zeitweise eine Meßstoff-Tempratur von mehr als 400°C aufweisenden, fluiden Meßstoffs, insb. nämlich zum Erfassen einer Temperatur eines fluiden Meßstoffs und/oder zum Erfassen einer Dichte eines fluiden Meßstoff und/oder zum Erfassen eines Drucks in einem fluiden Meßstoff und/oder zum Erfassen einer Strömungsgeschwindigkeit eines in einer Rohrleitung geführten fluiden Meßstoffs und/oder zum Erfassen von Druckschwankungen in einer in einem strömenden fluiden Meßstoff ausgebildeten Kärmänscher Wirbelstrasse, und zum Erzeugen von nämliche Meßgröße (x) repräsentierenden, insb. digitalen, Meßwerten (X).

## Claims

1. Transducer unit, particularly designed to measure pressure variations in a Karman vortex street formed in a flowing fluid, wherein said transducer unit comprises:
- a deformation body (111), particularly at least partially membrane-like and/or at least partially discoidal and/or at least partially tubular and/or metallic,
- a wireless sensor (112) positioned on the deformation body (111) and connected to it via a substance-to-substance connection, particularly by gluing, with a surface facing away from the deformation body,
- and at least a transmission and reception unit (113) positioned at a distance, particularly a fixed distance, from the wireless sensor, wherein said unit particularly has an antenna;
- wherein the transmission and reception unit (113) is designed to transform an electrical alternating voltage applied into electromagnetic free-space waves that propagate in the direction of the wireless sensor (112);
- wherein the wireless sensor (112) is designed to receive electromagnetic free-space waves and to convert them to acoustic surface waves that propagate along the surface facing away from the deformation body;
- wherein the wireless sensor (112) is designed to convert acoustic surface waves that propagate along said surface to electromagnetic free-space waves;
- and wherein the deformation body (111) is designed to be at least partially deformed, particularly to be bent and/or stretched from a static resting position, depending on a mechanical force acting upon it, particularly variable over time and/or introduced via a side of the deformation body facing away from the wireless sensor, and/or depending on a temperature change, in such a way that at least the surface of the wireless sensor (112) facing away from the deformation body (111) experiences a change of shape that influences a propagation of acoustic surface waves that propagate along said surface, particularly a change of shape that is variable over time and/or reversible, particularly a change of shape influencing a propagation path and/or a transit time of acoustic surface waves that propagate along said surface;
- and wherein the transmission and reception unit (113) is designed to receive electromagnetic free-space waves emitted by the wireless sensor (112), and to transform them into a conducted electrical alternating voltage;
**characterized in that** the transmission and reception unit (113) has a waveguide (116) positioned at a distance, particularly a fixed distance, from the wireless sensor, wherein said waveguide is particularly formed by a metallic tube and/or designed as a hollow waveguide,
- wherein said unit is designed to guide electromagnetic traveling waves and to transform them, at an end facing towards the wireless sensor (112), into electromagnetic free-space waves that propagate in the direction of said wireless sensor (112),
- and wherein said unit is designed to receive electromagnetic free-space waves coming from the wireless sensor (112) via said end and to transform them into electromagnetic traveling waves that propagate in the waveguide (116).

2. Transducer unit as claimed in the previous claim,
- wherein the wireless sensor (112) is designed to convert the received electromagnetic free-space waves into electromagnetic free-space waves transmitted with a time delay of at least 1 µs (microsecond); and/or
- wherein the wireless sensor (112) is designed to reflect acoustic surface waves that propagate along the surface, particularly in such a way that acoustic surface waves coming from a transmission and reception zone are converted to acoustic surface waves arriving with a delay of at least 1 µs in said transmission and reception zone; and/or
- wherein the deformation body (111) is designed to react to a mechanical force that is variable over time and acts thereon - particularly at least temporarily with an amount that varies periodically and/or at least temporarily with a direction of action that varies periodically - with elastic deformations that vary over time, particularly with elastic deformations that vary over time and that cause changes in the shape of the surface of the wireless sensor that are variable over time; and/or
- wherein the deformation body (111) is designed to react to a mechanical force that is variable over time and acts thereon - particularly at least temporarily with an amount that varies periodically and/or at least temporarily with a direction of action that varies periodically - particularly a mechanical force caused by a fluid medium in contact with the deformation body, with mechanical vibrations around a static resting position, particularly mechanical vibrations around a static resting position, which cause changes in the shape of the surface of the wireless sensor that are variable over time; and/or
- wherein the deformation body is designed to be allowed to vibrate for the purpose of causing changes in the shape of the surface of the wireless sensor that are variable over time; and/or
- wherein the deformation body is mechanically pretensioned, particularly elastically tensioned, in a static resting position; and/or
- wherein the deformation body (111) is designed to be put into contact with a fluid medium flowing at least temporarily, on a side facing away from the wireless sensor particularly in such a way that the change in the shape of the surface of the wireless sensor (112) is at least partially caused by a force transmitted onto the deformation body by the fluid medium and/or by a transfer of heat established between the medium and the deformation body; and/or
- wherein the deformation body (111) is made at least partially from a metal, particularly a stainless steel, titanium, tantalum or a nickel-based alloy; and/or
- wherein the deformation body (111) is at least partially made from a ceramic; and/or
- wherein the deformation body (111) is discoidal; and/or
- wherein the wireless sensor (112) has at least one interdigital transducer, particularly connected electrically to at least one antenna.

3. Transducer unit as claimed in one of the previous claims, further comprising an actuator (115), particularly positioned on the deformation body (111) and/or connected thereto via a substance-to-substance connection, wherein said actuator is designed to elastically deform the deformation body, particularly in such a way that the deformation body at least temporarily performs mechanical vibrations around a static resting position and/or in such a way that the deformation body is at least temporarily deflected out of a static resting position.

4. Transducer unit as claimed in one of the previous claims,
- wherein the deformation body (111) has a membrane (111a), particularly discoidal, or is formed by a membrane (111a), particularly a discoidal membrane,
- and wherein the wireless sensor is positioned on a side of the membrane and is connected thereto by a substance-to-substance connection, particularly by gluing.

5. Transducer unit as claimed in the previous claim, wherein the deformation body (111) has a sensor tongue (111b), particularly paddle-shaped and/or at least partially wedge-shaped and/or at least partially rod-shaped, or is formed by means of a sensor tongue (111b), particularly paddle-shaped and/or at least partially wedge-shaped and/or at least partially rod-shaped.

6. Transducer unit as claimed in the previous claim,
- wherein the sensor tongue is positioned on a side of the membrane facing away from the wireless sensor; and/or
- wherein the sensor tongue is designed to convert a force acting on it into a deformation of the membrane causing the change in the shape of the surface of the wireless sensor (112); and/or
- wherein the sensor tongue is designed to be inserted into an interior channel of a tube or to have fluid medium flowing in an interior channel of a tube flow around it.

7. Transducer unit as claimed in the previous claim, wherein the sensor tongue is designed to convert a force acting thereon, caused by a fluid medium, particularly caused by pressure variations within the medium, into a deformation of the membrane causing the change in the shape of the surface of the wireless sensor (112).

8. Transducer unit as claimed in one of the Claims 1 to 3, wherein the deformation body (111) is tubular.

9. Transducer unit as claimed in one of the previous claims, wherein the deformation body (111) comprises a tube, particularly at least partially curved and/or at least partially straight, or is formed by a tube, particularly at least partially curved and/or at least partially straight.

10. Transducer unit as claimed in one of the previous claims, wherein the deformation body (111), particularly tubular in shape or formed by a tube, has an interior channel surrounded by a wall, particularly metallic, wherein said interior channel is designed to guide a fluid medium, particularly flowing at least temporarily.

11. Transducer unit as claimed in the previous claim,
- wherein the wireless sensor (112) is positioned on a side of the wall facing away from the interior channel; and/or
- wherein the wireless sensor (112) is connected to the wall.

12. Transducer unit as claimed in one of the previous claims, further comprising at least another wireless sensor (112').

13. Transducer unit as claimed in the previous claim, wherein each of the at least two wireless sensors has a predefined bandwidth and a predefined center frequency, particularly a center frequency which deviates from the center frequency of the other sensor, by more than a sum of the bandwidths of the two wireless sensors.

14. Transducer unit as claimed in one of the previous claims, wherein the wireless sensor (112) has at least one antenna, particularly connected electrically to at least an interdigital transducer, wherein said antenna is designed to convert electromagnetic free-space waves it receives into a conducted electrical alternating voltage and/or to convert an applied electrical alternating voltage into electromagnetic free-space waves coming from the wireless sensor (112).

15. Transducer unit as claimed in the previous claim, further comprising a retaining unit mechanically connected both to the deformation body and to the transmission and reception unit (113), particularly formed by a connection nozzle, wherein said retaining unit is designed to fix a position and an orientation of the transmission and reception unit (113) in relation to the deformation body, or in relation to the wireless sensor (112 ) connected thereto, which is in the static resting position.

16. Measuring system, comprising:
- a transducer unit (Tr) as claimed in one of the previous claims, wherein said unit is positioned particularly in a connection nozzle of a process vessel;
- and a measuring electronics unit (µC) electrically coupled to the transducer unit (Tr), particularly to the waveguide of the transducer unit,
-- wherein said measuring electronics unit is designed to generate at least an electrical driver signal (s1) feeding and/or controlling the transducer unit and to couple it into the transducer unit (Tr), particularly into an antenna of the transducer unit or into a waveguide of the transducer unit,
-- and wherein said measuring electronics unit is designed to receive and evaluate a measuring signal (e1) supplied by the transducer unit, particularly by an antenna of the transducer unit or by a waveguide of the transducer unit, particularly to determine, by means of the measuring signal, a measured value quantifying a scale of a current change in the shape of the wireless sensor and/or a measured value quantifying a frequency of a periodic change in the shape of the wireless sensor.

17. Measuring system as claimed in the previous claim,
- wherein the measuring electronics unit is designed to generate the driver signal with a clocked voltage, particularly formed as a sequence of square or sinusoidal voltage pulses formed as pulse packages in a predefined and/or adjustable and/or at least temporarily constant clock, and to couple it into the transducer unit; and/or
- wherein the measuring electronics unit is designed to determine, based on transit time information contained in the measuring signal, a measured value quantifying a frequency of a periodic change in the shape of the wireless sensor; and/or
- wherein the measuring electronics unit is designed to determine, based on an amplitude spectrum contained in the measuring signal, a measured value quantifying a scale of a current change in the shape of the wireless sensor.

18. Measuring system as claimed in one of the Claims 16 to 17,
- wherein the transducer unit is positioned in a connection nozzle of a process vessel, particularly a pipe or a tank, particularly in such a way that the deformation body at least partially projects into an interior channel of said process vessel or in such a way that the deformation body can be put into contact with a medium conducted in said process vessel; and/or
- wherein the measuring electronics unit is designed to measure at least a physical measured variable of a fluid medium flowing at least temporarily, particularly to measure a temperature of a fluid medium and/or to measure a density of a fluid medium and/or to measure a pressure in a fluid medium and/or to measure a flow velocity of a fluid medium conducted in a pipe and/or to measure pressure variations in a Karman vortex street formed in a flowing fluid medium;
-- to determine, on the basis of transit time information contained in the measuring signal, a measured value quantifying a frequency of a periodic change in the shape of the wireless sensor; and/or
-- to determine, on the basis of an amplitude spectrum contained in the measuring signal, a measured value quantifying a scale of a current change in the shape of the wireless sensor.

19. Use of a transducer unit as claimed in one of the Claims 1 to 15 or a measuring system as claimed in one of the Claims 16 to 18 to measure at least one physical measured variable (x) of a fluid medium, particularly flowing at least temporarily and/or at least temporarily having a medium temperature of more than 400 °C, particularly to measure a temperature of a fluid medium and/or to measure a density of a fluid medium and/or to measure a pressure in a fluid medium and/or to measure a flow velocity of a fluid medium conducted in a pipe and/or to measure pressure variations in a Karman vortex street formed in a flowing fluid medium, and to generate measured values (X), particularly digital values, representing said measured variable (x).

## Revendications

1. Dispositif transducteur, notamment destiné à mesurer des variations de pression dans une allée de tourbillons selon Karman formée dans un fluide en écoulement, lequel dispositif transducteur comprend :
- un corps de déformation (111), notamment au moins partiellement membraneux et/ou au moins partiellement en forme de disque et/ou au moins partiellement tubulaire et/ou métallique,
- un capteur radio (112) positionné sur le corps de déformation (111) et relié à celui-ci par liaison de matière, notamment par collage, avec une surface opposée au corps de déformation,
- ainsi qu'au moins un dispositif d'émission et de réception (113) positionné à une distance, notamment fixe, du capteur radio, lequel dispositif comporte notamment une antenne ;
- le dispositif d'émission et de réception (113) étant conçu pour transformer une tension électrique alternative appliquée en ondes électromagnétiques en espace libre se propageant en direction du capteur radio (112) ;
- le capteur radio (112) étant conçu pour recevoir des ondes électromagnétiques en espace libre et les convertir en ondes acoustiques de surface se propageant le long de la surface opposée au corps de déformation ;
- le capteur radio (112) étant conçu pour convertir les ondes acoustiques de surface se propageant le long de la même surface en ondes électromagnétiques en espace libre ;
- et le corps de déformation (111) étant conçu pour être au moins partiellement déformé, notamment pour être déformé et/ou étiré à partir d'une position de repos statique, en fonction d'une force mécanique agissant sur lui, notamment variable dans le temps et/ou introduite par un côté du corps de déformation opposé au capteur radio, et/ou en fonction d'une variation de la température, de telle sorte qu'au moins la surface du capteur radio (112) opposée au corps de déformation (111) subit une modification de forme influençant une propagation d'ondes acoustiques de surface se propageant le long de ladite surface, notamment une modification de forme variable dans le temps et/ou réversible, notamment une modification de forme influençant un chemin de propagation et/ou un temps de propagation d'ondes acoustiques de surface se propageant le long de ladite surface ;
- et le dispositif d'émission et de réception (113) étant conçu pour recevoir des ondes électromagnétiques en espace libre émises par le capteur radio (112), et pour les transformer en une tension électrique alternative véhiculée par câble ; **caractérisé en ce que** le dispositif d'émission et de réception (113) présente un guide d'ondes (116) positionné à une distance, notamment fixe, du capteur radio, lequel guide d'ondes est notamment formé au moyen d'un tube métallique et/ou réalisé sous forme de conducteur creux,
- lequel dispositif est conçu pour guider des ondes électromagnétiques progressives et les transformer, à une extrémité tournée vers le capteur radio (112), en ondes électromagnétiques en espace libre se propageant en direction du même capteur radio (112),
- et lequel dispositif est conçu pour recevoir des ondes électromagnétiques en espace libre partant du capteur radio (112) par l'intermédiaire de la même extrémité et pour les transformer en ondes électromagnétiques progressives se propageant dans le guide d'ondes (116).

2. Dispositif transducteur selon la revendication précédente,
- pour lequel le capteur radio (112) est conçu pour convertir des ondes électromagnétiques en espace libre reçues en ondes électromagnétiques en espace libre émises avec un retard d'au moins 1 µs (microseconde) ; et/ou
- pour lequel le capteur radio (112) est conçu pour réfléchir des ondes acoustiques de surface se propageant le long de la surface, notamment de telle sorte que des ondes acoustiques de surface partant d'une zone d'émission et de réception sont converties en ondes acoustiques de surface arrivant avec un retard d'au moins 1 µs sur la même zone d'émission et de réception ; et/ou
- pour lequel le corps de déformation (111) est conçu pour réagir à une force mécanique variable dans le temps qui agit sur lui - notamment au moins temporairement avec une amplitude qui varie périodiquement et/ou au moins temporairement avec une direction d'action qui varie périodiquement - par des déformations élastiques qui varient dans le temps, notamment par des déformations élastiques qui varient dans le temps et qui provoquent des modifications, variables dans le temps, de la forme de la surface du capteur radio ; et/ou
- pour lequel le corps de déformation (111) est conçu pour réagir à une force mécanique variable dans le temps qui agit sur lui - notamment au moins temporairement avec une amplitude qui varie périodiquement et/ou au moins temporairement avec une direction d'action qui varie périodiquement - notamment une force mécanique provoquée par un produit fluide en contact avec le corps de déformation, par des vibrations mécaniques autour d'une position de repos statique, notamment par des vibrations mécaniques autour d'une position de repos statique, qui provoquent des modifications variables dans le temps de la forme de la surface du capteur radio ; et/ou
- pour lequel le corps de déformation est conçu pour être amené à vibrer afin de provoquer les modifications variables dans le temps de la forme de la surface du capteur radio ; et/ou
- pour lequel le corps de déformation est précontraint mécaniquement, notamment étiré élastiquement, dans une position de repos statique ; et/ou
- pour lequel le corps de déformation (111) est conçu pour être mis en contact, sur un côté opposé au capteur radio, avec un produit fluide s'écoulant au moins temporairement, notamment de telle sorte que la modification de la forme de la surface du capteur radio (112) est provoquée au moins en partie par une force transmise par le produit fluide sur le corps de déformation et/ou par un transfert de chaleur établi entre le produit et le corps de déformation ; et/ou
- pour lequel le corps de déformation (111) est constitué au moins partiellement d'un métal, notamment d'un acier inoxydable, de titane, de tantale ou d'un alliage à base de nickel ; et/ou
- pour lequel le corps de déformation (111) est constitué au moins partiellement d'une céramique ; et/ou
- pour lequel le corps de déformation (111) est réalisé en forme de disque ; et/ou
- pour lequel le capteur radio (112) présente au moins un transducteur interdigité, notamment relié électriquement à au moins une antenne.

3. Dispositif transducteur selon l'une des revendications précédentes, comprenant en outre un actionneur (115), positionné notamment sur le corps de déformation (111) et/ou relié à celui-ci par une liaison de matière, lequel actionneur est conçu pour déformer élastiquement le corps de déformation, notamment de telle sorte que le corps de déformation exécute au moins temporairement des vibrations mécaniques autour d'une position de repos statique et/ou de telle sorte que le corps de déformation est dévié au moins temporairement d'une position de repos statique.

4. Dispositif transducteur selon l'une des revendications précédentes,
- pour lequel le corps de déformation (111) présente une membrane (111a), notamment en forme de disque circulaire, ou est formé au moyen d'une membrane (111a), notamment en forme de disque circulaire,
- et pour lequel le capteur radio est positionné sur un côté de la membrane et est relié à celle-ci, notamment par collage, par une liaison de matière.

5. Dispositif transducteur selon la revendication précédente, pour lequel le corps de déformation (111) présente une languette de capteur (111b), notamment en forme de pale et/ou au moins partiellement en forme de coin et/ou au moins partiellement en forme de tige, ou est formé au moyen d'une languette de capteur (111b), notamment en forme de pale et/ou au moins partiellement en forme de cale et/ou au moins partiellement en forme de tige.

6. Dispositif transducteur selon la revendication précédente,
- pour lequel la languette de capteur est positionnée sur un côté de la membrane opposé au capteur radio ; et/ou
- pour lequel la languette de capteur est conçue pour convertir une force agissant sur elle en une déformation de la membrane provoquant la modification de la forme de la surface du capteur radio (112) ; et/ou
- pour lequel la languette de capteur est conçue pour être insérée dans un canal intérieur d'un tube ou pour être léchée par un produit fluide s'écoulant dans un canal intérieur d'un tube.

7. Dispositif transducteur selon la revendication précédente, pour lequel la languette de capteur est conçue pour convertir une force agissant sur elle, provoquée par un produit fluide, notamment par des variations de pression à l'intérieur du produit, en une déformation de la membrane provoquant la modification de la forme de la surface du capteur radio (112).

8. Dispositif transducteur selon l'une des revendications 1 à 3, pour lequel le corps de déformation (111) est de forme tubulaire.

9. Dispositif transducteur selon l'une des revendications précédentes, pour lequel le corps de déformation (111) comprend un tube, notamment au moins partiellement courbé et/ou au moins partiellement droit, ou est formé au moyen d'un tube, notamment au moins partiellement courbé et/ou au moins partiellement droit.

10. Dispositif transducteur selon l'une des revendications précédentes, pour lequel le corps de déformation (111), notamment de forme tubulaire ou formé au moyen d'un tube, présente un canal intérieur enveloppé d'une paroi, notamment métallique, lequel canal intérieur est conçu pour guider un produit fluide, notamment s'écoulant au moins temporairement.

11. Dispositif transducteur selon la revendication précédente,
- pour lequel le capteur radio (112) est positionné sur un côté de la paroi opposé au canal intérieur ; et/ou
- pour lequel le capteur radio (112) est relié à la paroi.

12. Dispositif transducteur selon l'une des revendications précédentes, comprenant en outre au moins un autre capteur radio (112').

13. Dispositif transducteur selon la revendication précédente, pour lequel chacun des au moins deux capteurs radio présente une largeur de bande prédéfinie et une fréquence centrale prédéfinie, notamment une fréquence centrale qui s'écarte, respectivement de la fréquence centrale de l'autre, de plus d'une somme des largeurs de bande des deux capteurs radio.

14. Dispositif transducteur selon l'une des revendications précédentes, pour lequel le capteur radio (112) comporte au moins une antenne, notamment reliée électriquement à au moins un transducteur interdigité, laquelle antenne est destinée à convertir des ondes électromagnétiques en espace libre reçues par celle-ci en une tension électrique alternative véhiculée par câble et/ou pour convertir une tension électrique alternative appliquée en des ondes électromagnétiques en espace libre provenant du capteur radio (112).

15. Dispositif transducteur selon la revendication précédente, comprenant en outre un dispositif de maintien relié mécaniquement à la fois au corps de déformation et au dispositif d'émission et de réception (113), formé notamment au moyen d'un piquage, lequel dispositif de maintien est destiné à définir une position et une orientation du dispositif d'émission et de réception (113) par rapport au corps de déformation ou au capteur radio (112 ) relié à celui-ci, se trouvant en position de repos statique.

16. Système de mesure, comprenant :
- un dispositif transducteur (Tr) selon l'une des revendications précédentes, lequel dispositif est positionné notamment dans un piquage d'un réservoir de process ;
- ainsi qu'une électronique de mesure (µC) couplée électriquement au dispositif transducteur (Tr), notamment au guide d'ondes du dispositif transducteur,
-- laquelle électronique de mesure est conçue pour générer au moins un signal d'attaque électrique (s1) alimentant et/ou commandant le dispositif transducteur et pour l'injecter dans le dispositif transducteur (Tr), notamment dans une antenne du dispositif transducteur ou dans un guide d'ondes du dispositif transducteur,
-- et laquelle électronique de mesure est conçue pour recevoir et évaluer un signal de mesure (e1) fourni par le dispositif transducteur, notamment par une antenne du dispositif transducteur ou par un guide d'ondes du dispositif transducteur, notamment pour déterminer, au moyen du signal de mesure, une valeur mesurée quantifiant une ampleur d'une modification momentanée de la forme du capteur radio et/ou une valeur mesurée quantifiant une fréquence d'une modification périodique de la forme du capteur radio.

17. Système de mesure selon la revendication précédente,
- pour lequel l'électronique de mesure est conçue pour générer le signal d'attaque avec une tension cadencée, notamment conçue en tant que suite d'impulsions de tension rectangulaires ou sinusoïdales formées en paquets d'impulsions à une cadence prédéfinie et/ou réglable et/ou au moins temporairement constante, et pour l'injecter dans le dispositif transducteur ; et/ou
- pour lequel l'électronique de mesure est conçue pour déterminer, sur la base d'une information de temps de propagation contenue dans le signal de mesure, une valeur mesurée quantifiant une fréquence d'une modification périodique de la forme du capteur radio ; et/ou
- pour lequel l'électronique de mesure est conçue pour déterminer, sur la base d'un spectre d'amplitude contenu dans le signal de mesure, une valeur mesurée quantifiant une ampleur d'une modification momentanée de la forme du capteur radio.

18. Système de mesure selon l'une des revendications 16 à 17,
- pour lequel le dispositif transducteur est positionné dans un piquage d'un réservoir de process, notamment une conduite ou une cuve, notamment de telle sorte que le corps de déformation pénètre au moins partiellement dans un canal intérieur du même réservoir de process ou que le corps de déformation peut être mis en contact avec un produit guidé dans le réservoir de process ; et/ou
- pour lequel l'électronique de mesure est conçue pour mesurer au moins une grandeur de mesure physique d'un produit fluide s'écoulant au moins temporairement, notamment pour mesurer une température d'un produit fluide et/ou pour mesurer une densité d'un produit fluide et/ou pour mesurer une pression dans un produit fluide et/ou pour mesurer une vitesse d'écoulement d'un produit fluide guidé dans une conduite et/ou pour mesurer des variations de pression dans une allée de tourbillons selon Karman formée dans un produit fluide en écoulement
-- pour déterminer, sur la base d'une information de temps de propagation contenue dans le signal de mesure, une valeur mesurée quantifiant une fréquence d'une modification périodique de la forme du capteur radio ; et/ou
-- pour déterminer, sur la base d'un spectre d'amplitude contenu dans le signal de mesure, une valeur mesurée quantifiant une ampleur d'une modification momentanée de la forme du capteur radio.

19. Utilisation d'un dispositif transducteur selon l'une des revendications 1 à 15 ou d'un système de mesure selon l'une des revendications 16 à 18 pour la mesure d'au moins une grandeur de mesure physique (x) d'un produit fluide, notamment s'écoulant au moins temporairement et/ou présentant au moins temporairement une température de produit de plus de 400 °C, notamment pour la mesure d'une température d'un fluide et/ou pour la mesure d'une densité d'un produit fluide et/ou pour la mesure d'une pression dans un produit fluide et/ou pour la mesure d'une vitesse d'écoulement d'un produit fluide guidé dans une conduite et/ou pour la mesure de variations de pression dans une allée de tourbillons selon Karman formée dans un produit fluide en écoulement, et pour la génération de valeurs mesurées (X), notamment numériques, représentant la grandeur de mesure (x) en question.
